# EUROPEAN PATENT SPECIFICATION

(11) **EP 3 837 447 B1**
(45) Date of publication and mention of the grant of the patent: **01.11.2023**
(21) Application number: 19850654.5
(22) Date of filing: 13.08.2019
(51) Int. Cl.: F16B 12/26

(54) **NICKEL BISCUIT JOINER APPARATUS AND METHOD**
VORRICHTUNG UND VERFAHREN ZUM VERBINDEN VON NICKELSCHMIEDEROHLINGEN
APPAREIL ET PROCÉDÉ D'ASSEMBLAGE DE PLANCHETTES AVEC DES PIÈCES DE MONNAIE

(30) Priority: 13.08.2018 US 201816101523
(43) Date of publication of application: 23.06.2021
(73) Proprietor: Dumuk, Gerard Valbuena, Alameda, CA 94501 (US); McConnell, Rachel, Oakland, CA 94603 (US)
(72) Inventor: Dumuk, Gerard Valbuena, Alameda, CA 94501 (US); McConnell, Rachel, Oakland, CA 94603 (US)
(74) Representative: Humphrey-Evans, Edward John
(86) International application number: PCT/US2019/046427
(87) International publication number: WO 2020/037008

(56) References cited:
- EP-A1- 0 357 129
- EP-A2- 1 400 641
- DE-A1- 19 929 144
- US-A- 639 781
- US-A- 1 717 142
- US-A- 3 749 465
- US-A- 4 117 784
- US-A- 4 689 929
- US-A- 5 458 433
- US-A1- 2004 060 255

## Description

### BACKGROUND

### Field of the Art

The disclosure relates to the fields of carpentry methods and more particularly to the field of, woodworking, plate-biscuit joinery, furniture fasteners and methods and tooling thereof. More particularly the invention relates to a furniture joint according to the preamble of claim 1, a method for milling slots in wood according to the preamble of claim 7, a method of assembling a furniture joint according to the preamble of claim 11 and an item of furniture according to the preamble of claim 15. Such a furniture joint is known from EP 0 357 129 A1.

### Discussion of the State of the Art

This invention is a method for machining, configuring and using woodworking tools to produce wood furniture capable of being joined with nickels (U.S. 5 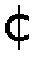 coin) as fasteners (as plates, or plate biscuits). The herein-disclosed method lies within the umbrella of plate joinery, as do the joints and furniture manufactured via the herein-disclosed method.

The market for the instant method (and for furniture so assembled) is universal; manufacturers save money on assembly kits comprising plates, and customers may assemble & disassemble furniture without keeping track of biscuits. The enclosed method allows for furniture assembly without cam fasteners, bolts or screws.

Historically, joining wood parts/panels is often accomplished via cam bolts and pins. "Mortise and tenon" joints are also used, as are glue (via clamping) or standard biscuit-joiner methods. "Edge to face" jointing, aka shelf/housing jointing, is often accomplished via biscuit joinery, but biscuit joinery usually requires screws in conjunction with biscuits (internal plates inserted into slots) for stronger fastening. Often the plates/biscuits are dipped in glue before being inserted, or their moisture is predetermined to cause internal expansion (customarily enlarge upon pre-wetting).

Customarily, a "biscuit joiner" [dedicated woodworking tool] is used to mill the slots for such plates, and said power tool is often fitted with a fence-attachment to keep the tool flush as it cuts. This tool is limiting, however, as the biscuits will usually be accessible only from the edge as "wedge-in" pieces, and the jointer only allows certain specified size/shape biscuits. In addition, unlike the present invention, biscuit slots milled by a biscuit joiner are usually wholly-concealed once assembled (once the biscuits are inserted into their slot mouth and the wood panels are then pressed together).

Traditionally, to mill slots for biscuits, a 2mm (e.g.) biscuit joint slot cutter is used (customarily with a 6.35mm to 50.8mm (¼" to 2") shank/shaft/neck). A router bit is used in such circumstances, chucked and positioned so it moves through a groove in the wood to mill an internal slot. Radial guide bearings allow precise depth stop.

Even when such a router is used with this pre-fabricated bit, the resulting assembly methods leave the biscuit hidden (Gammed-in, once-assembled), requiring the furniture owner to permanently "pull apart" the wood pieces/panels in order to disassemble the furniture. Such disassembly is particularly difficult, as the biscuits are usually comprised of wood, and so expand to become inaccessible, or the biscuits pulverize upon removal.

Furniture owners therefore need a better method, on in which they can easily access the biscuits to pull them out to disassemble the wood furniture. Furthermore, both furniture sellers and consumers would prefer to use a "makeshift biscuit," a common item they already possess (something they need not keep track of).

The use of a nickel (the common U.S. coin) makes an ideal biscuit element, as coins are uncommonly durable, waterproof, non-expanding, non-conductive, and guaranteed to remain the mere price of a nickel.

Therefore, what is needed is a system (a specially tailored slot cutter used in a special way) that allows common nickels to function as fasteners to assemble wood furniture.

### SUMMARY

Accordingly, the inventor has conceived and reduced to practice, systems and methods for machining, configuring and using woodworking tools to produce wood furniture capable of being joined with nickels (U.S. 5 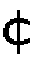 coin) as fasteners (as plates, or plate biscuits).

According to one aspect, a modification of biscuit joiner, is disclosed. Specifically, the instant invention creates two-way slots, allowing a shelf joint to be fastened with a common nickel (or similar coin or disc). Rather than using a limited biscuit cutter/biscuit joiner, the instant method discloses use of a router with a specialized router bit (aka slot cutter bit); the slot cutter on the router allows a common U.S. 5¢ piece to become the spline/plate/biscuit joining the two wood pieces/panels, thereby allowing rapid assembly & disassembly of wood furniture.

In accordance with the present invention there is provided a furniture joint in accordance with claim 1. The coin utilized in the invention can be any disc with sufficient strength and texture to fit in the coin wells and to slide along the raceway and the slot, and to hold said wood-pieces together. The coin or disc conveniently has at least one hole allowing it to be pulled out with ease using a tool that can enter a hole.

A raceway overhang conveniently has a thickness between about 15% and about 30% of the first wood-piece's thickness, preferably about 20% of the first wood-piece's thickness. The depth of the tool raceway conveniently equals: the overhang's thickness, plus the coin's thickness, plus an "offset" of between about 0.5 % and 1.3 % of the first wood-piece's thickness; and wherein the second wood-piece's coin slot is positioned at the same height as the raceway's depth. An offset can be provided of about 0.75% of the first wood-piece's thickness. The second wood-piece's coin slot is positioned at the same height as is the raceway's depth. The slot and said groove are larger than the pieces that fit inside them by an "offset" amount, and wherein the thickness of said overhang comprises a "no-break distance," and wherein both wood-pieces are 25.4mm / 1" plywood having about 25.4mm / 1" edges; wherein the coin has a diameter of about 21.18mm / 0.834" and a thickness of about 1.18mm / 0.074";

In accordance with another aspect of the invention, there is provided a method of milling slots in wood so a coin piece can function as a biscuit fastening, in accordance with claim 7.

In accordance with still further aspects of the invention, there is provided a method of assembling a furniture joint according to claim 11 and an item of furniture, according to claim 15, selected from the group, chairs, tables, bookshelves, wherein there is provided a joint as between first and second parts of the item of furniture wherein a first furniture part has a planar face with at least one coin well and at least one slot are milled into the planar face such that a coin may be placed in the coin well, then slid along an adjacent coin-raceway into a coin-sized slot in the at least one second, complementary furniture part, such that the coin straddles the first and second furniture parts by being simultaneously positioned in both the raceway and the second furniture part; wherein said raceway has a sufficient overhang of at least ten per cent of the first furniture part's thickness, such that the coin holds the first and second furniture parts together even if said furniture is lifted by its first furniture part.

### BRIEF DESCRIPTION OF THE DRAWING FIGURES

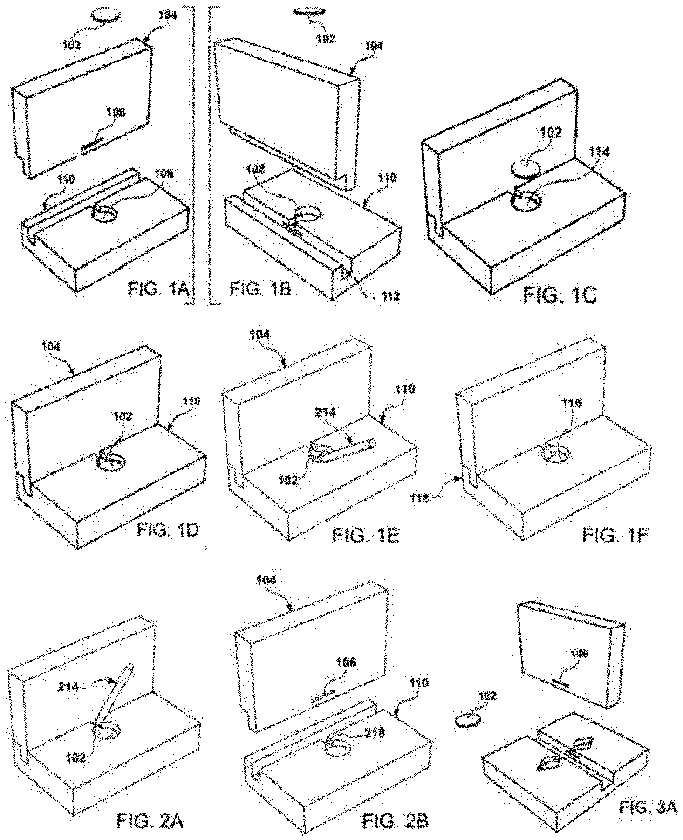

The accompanying drawings illustrate several aspects and, together with the description, serve to explain the invention according to the aspects. It will be appreciated by one skilled in the art that the particular arrangements illustrated in the drawings are merely exemplary, and are not to be considered as limiting of the scope of the invention or the claims herein in any way.
**Fig. 1A** is a diagram illustrating an exemplary of an elevational view depicting the invention at one stage of assembly, according to one embodiment of the invention.
**Fig. 1B** is a diagram illustrating an exemplary of an elevational view depicting the invention at one stage of assembly, according to one embodiment of the invention.
**Fig. 1C** is a diagram illustrating an exemplary of an elevational view depicting the invention at one stage of assembly, according to one embodiment of the invention.
**Fig. 1D** is a diagram illustrating an exemplary of an elevational view depicting the invention at one stage of assembly, according to one embodiment of the invention.
**Fig. 1E** is a diagram illustrating an exemplary of an elevational view depicting the invention at one stage of assembly, according to one embodiment of the invention.
**Fig. 1F** is a diagram illustrating an exemplary of an elevational view depicting the invention at one stage of assembly, according to one embodiment of the invention.
**Fig. 2A** is a diagram illustrating an exemplary of an elevational view of the invention;
herein a tool pushing a coin from the coin well into the male part's slot to act as a fastener and complete the joint, according to one embodiment of the invention **Fig. 2B** is a diagram illustrating an exemplary of an elevational view of the invention in its disassembled state, according to one embodiment of the invention.
**Fig. 3A** is a diagram illustrating an exemplary of a perspective view showing the invention in its "before" state, according to one embodiment of the invention. (Note the coin wells in these Figures have an added "notch" for easier tool-entry.)

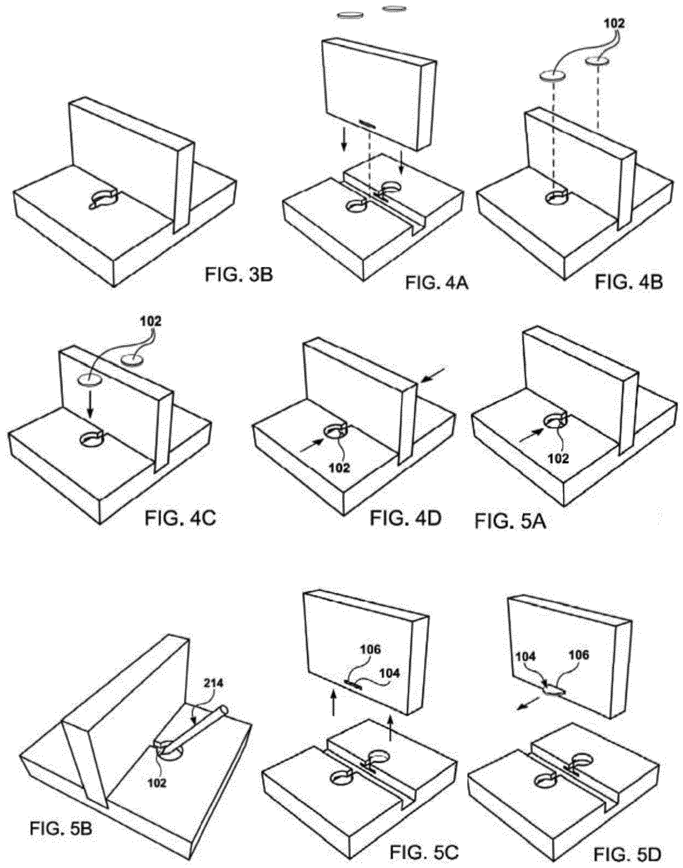

**Fig. 3B** is a diagram illustrating an exemplary of a perspective view showing the invention in its "after" state, according to one embodiment of the invention. (Note the coin wells in these Figures have an added "notch" for easier tool-entry.)
**Fig. 4A** is a diagram illustrating an exemplary of a perspective view showing the method of assembly, from disassembled to assembled, according to one embodiment of the invention.
**Fig. 4B** is a diagram illustrating an exemplary of a perspective view showing the method of assembly, from disassembled to assembled, according to one embodiment of the invention.
**Fig. 4C** is a diagram illustrating an exemplary of a perspective view showing the method of assembly, from disassembled to assembled, according to one embodiment of the invention.
**Fig 4D** is a diagram illustrating an exemplary of a perspective view showing the method of assembly, from disassembled to assembled, according to one embodiment of the invention.
**Fig. 5A** is a diagram illustrating an exemplary of a perspective view showing the method of disassembly, featuring use of the push-tool to move the nickel, according to one embodiment of the invention.
**Fig. 5B** is a diagram illustrating an exemplary of a perspective view showing the method of disassembly, featuring use of the push-tool to move the nickel, according to one embodiment of the invention.
**Fig. 5C** is a diagram illustrating an exemplary of a perspective view showing the method of disassembly, featuring use of the push-tool to move the nickel, according to one embodiment of the invention.
**Fig. 5D** is a diagram illustrating an exemplary of a perspective view showing the method of disassembly, featuring use of the push-tool to move the nickel, according to one embodiment of the invention.

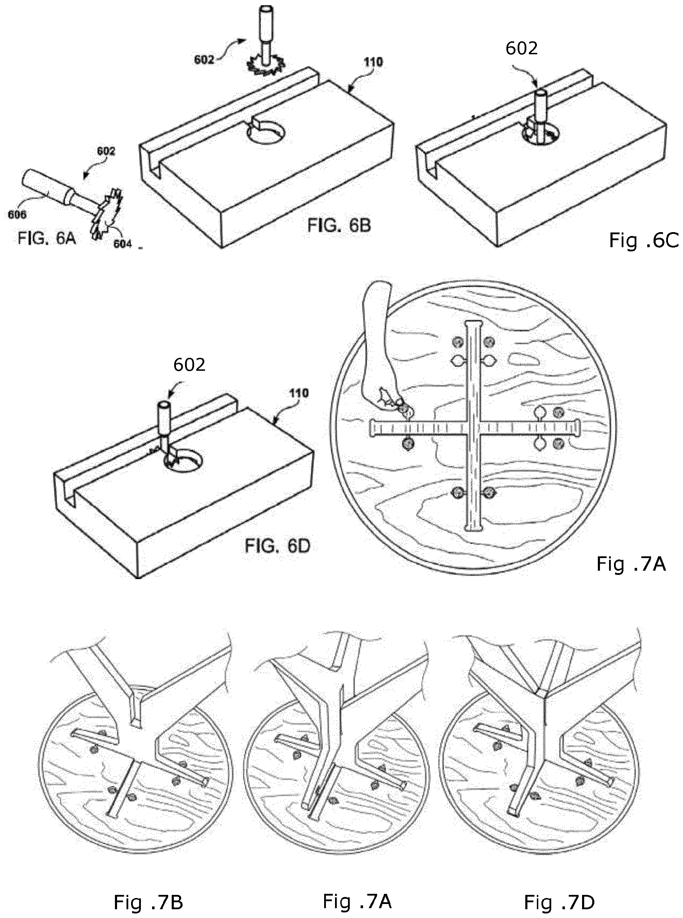

**Fig. 6A** is a diagram illustrating an exemplary of a perspective view showing milling tool (and bit thereof) at work, milling the tool raceway and the coin-well, according to one embodiment of the invention.
**Fig. 6B** is a diagram illustrating an exemplary of a perspective view showing milling tool (and bit thereof) at work, milling the tool raceway and the coin-well, according to one embodiment of the invention.
**Fig. 6C** is a diagram illustrating an exemplary of a perspective view showing milling tool (and bit thereof) at work, milling the tool raceway and the coin-well, according to one embodiment of the invention.
**Fig. 6D** is a diagram illustrating an exemplary of a perspective view showing milling tool (and bit thereof) at work, milling the tool raceway and the coin-well, according to one embodiment of the invention.
**Fig. 7A** is a diagram illustrating an exemplary of a perspective view of an apparatus device, to wit, a table comprising said joint(s) fastened via the instant herein-disclosed method, according to one embodiment of the invention.
**Fig. 7B** is a diagram illustrating an exemplary of a perspective view of an apparatus device, to wit, a table comprising said joint(s) fastened via the instant herein-disclosed method, according to one embodiment of the invention.
**Fig. 7C** is a diagram illustrating an exemplary of a perspective view of an apparatus device, to wit, a table comprising said joint(s) fastened via the instant herein-disclosed method, according to one embodiment of the invention.
**Fig. 7D** is a diagram illustrating an exemplary of a perspective view of an apparatus device, to wit, a table comprising said joint(s) fastened via the instant herein-disclosed method, according to one embodiment of the invention.

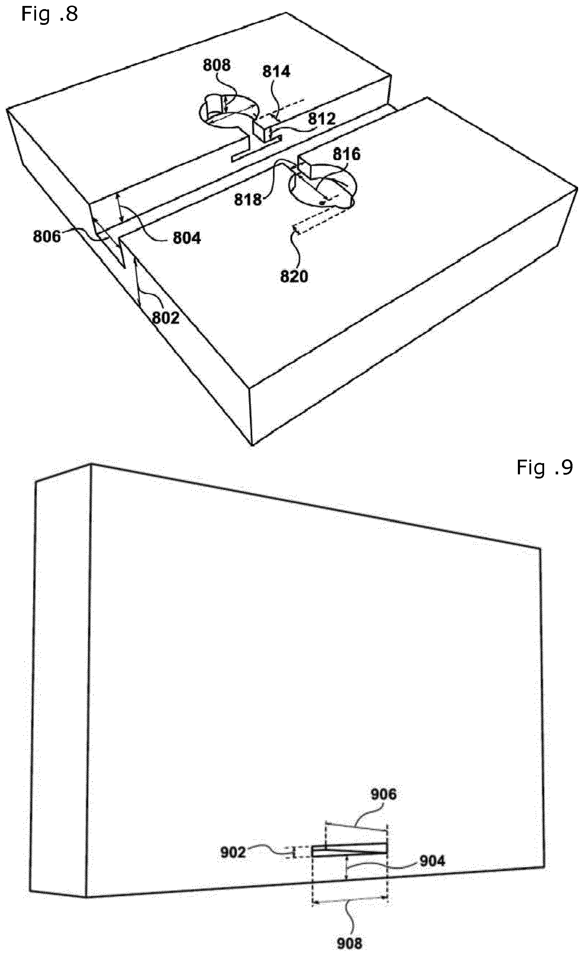

**Fig. 8** is a diagram illustrating an exemplary view of elevational view of the female part, delineating the parameters, ratios and measurements (here the dimensions of various slots in the "male part/panel"), according to a preferred embodiment of the invention.

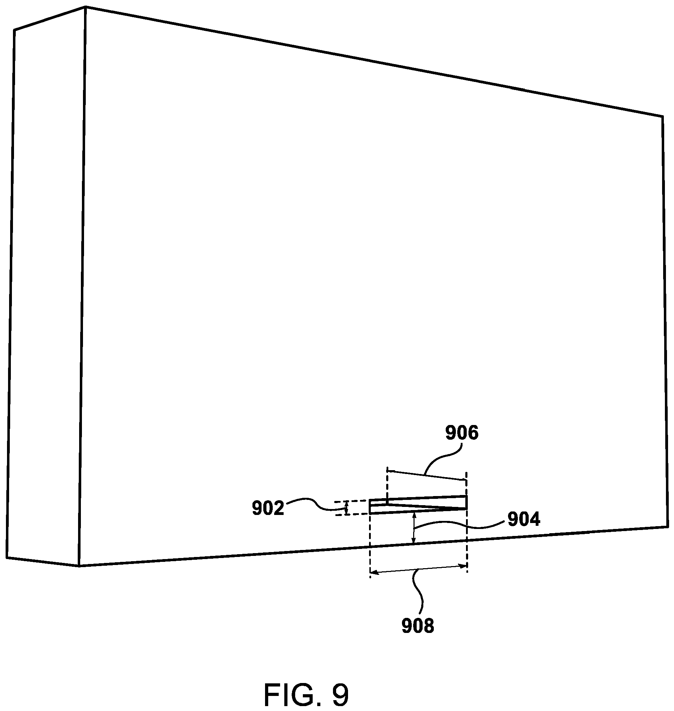

**Fig. 9** is a diagram illustrating an exemplary view of elevational view of the male part, delineating the parameters, ratios and measurements, (here the dimensions of various slots in the "female part/panel") according to a preferred embodiment of the invention.

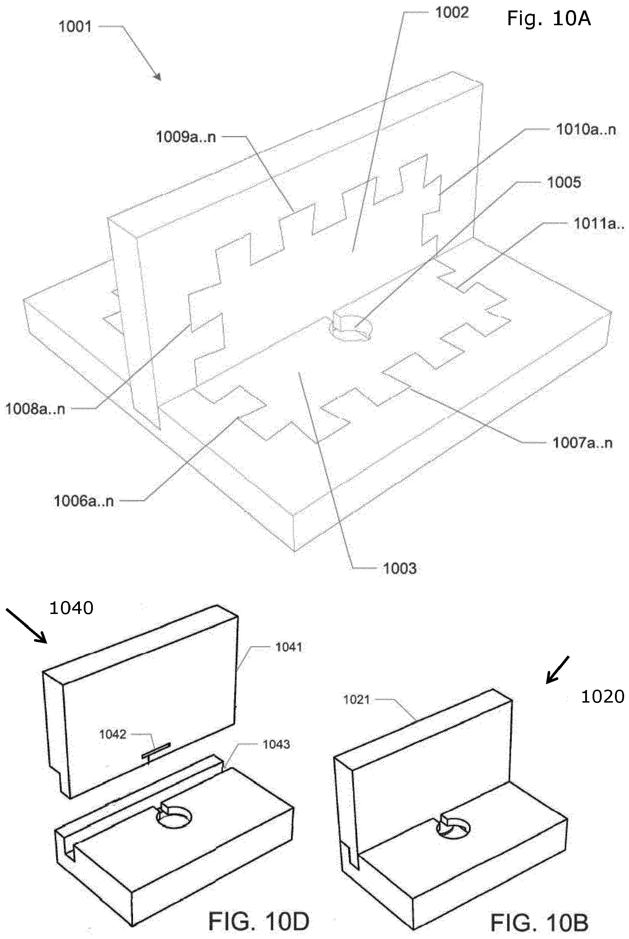

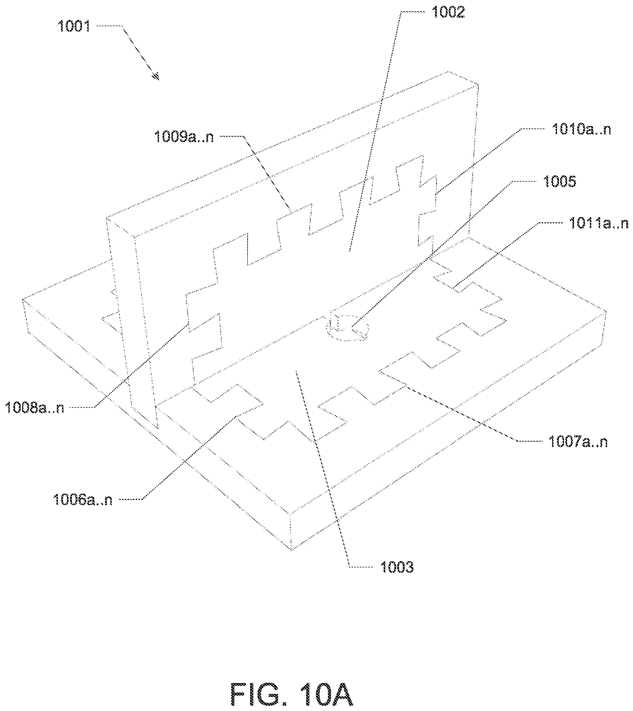

**Fig. 10A** shows another example embodiment of a block that is machined with dovetail style edges inserted into a fiber board furniture piece.

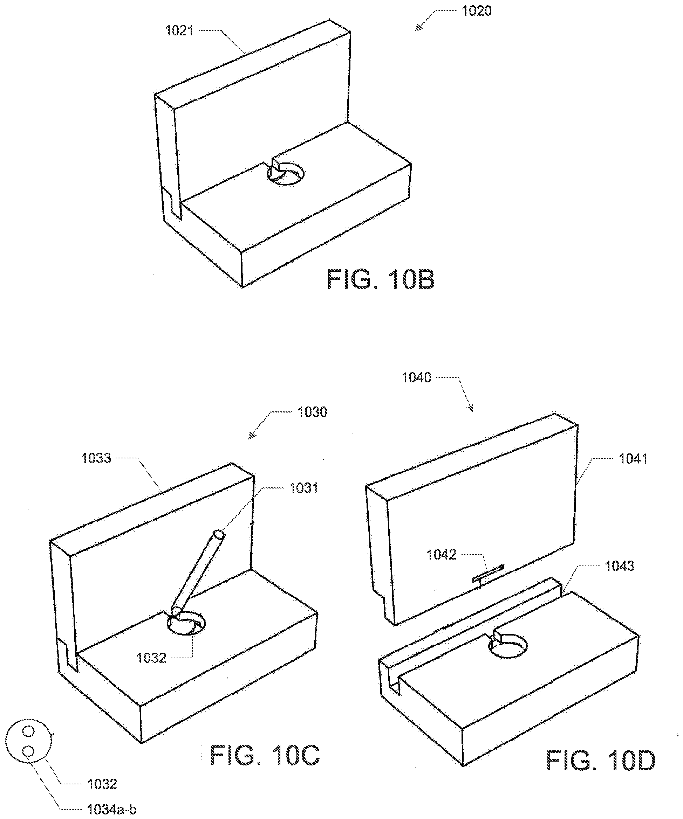

**Fig. 10B** shows the other example embodiment of the block joined using a token having different shapes.

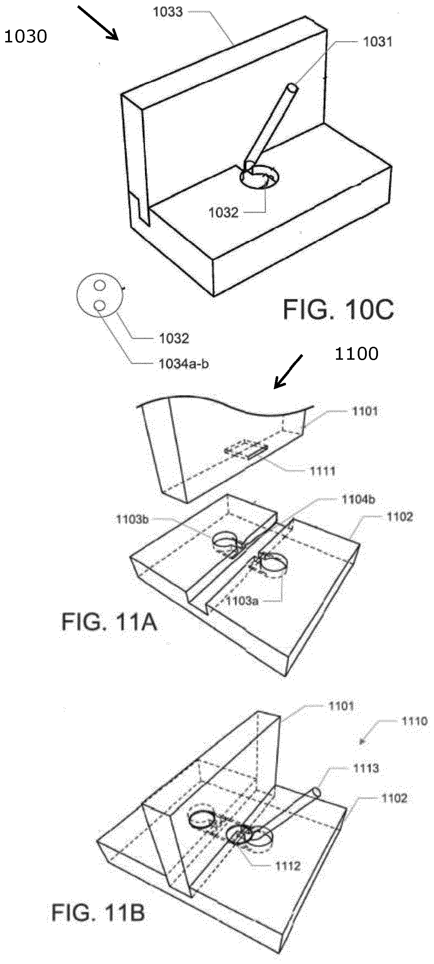

**Fig. 10C** shows the other example embodiment illustrating how the token or biscuit is pushed in or pulled out using a tool.
**Fig. 10D** shows the other example embodiment in which the joint is disassembled.

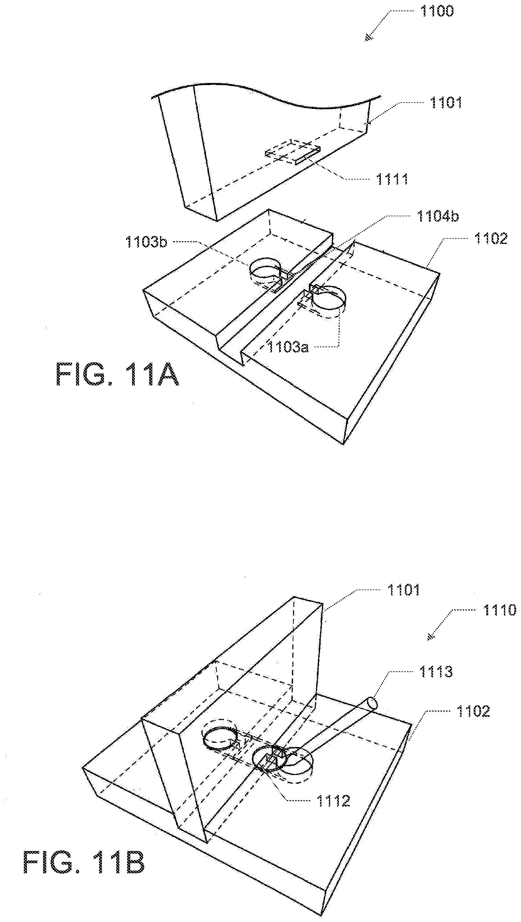

**Fig. 11A-B** show two perspectives of yet another embodiment providing a joint using a two-nickel or two-token assembly.

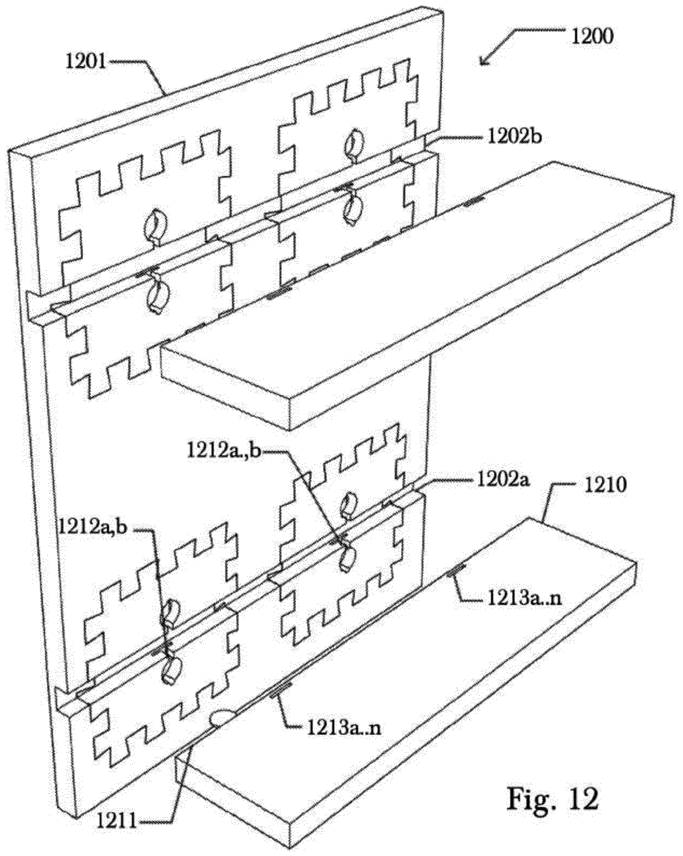

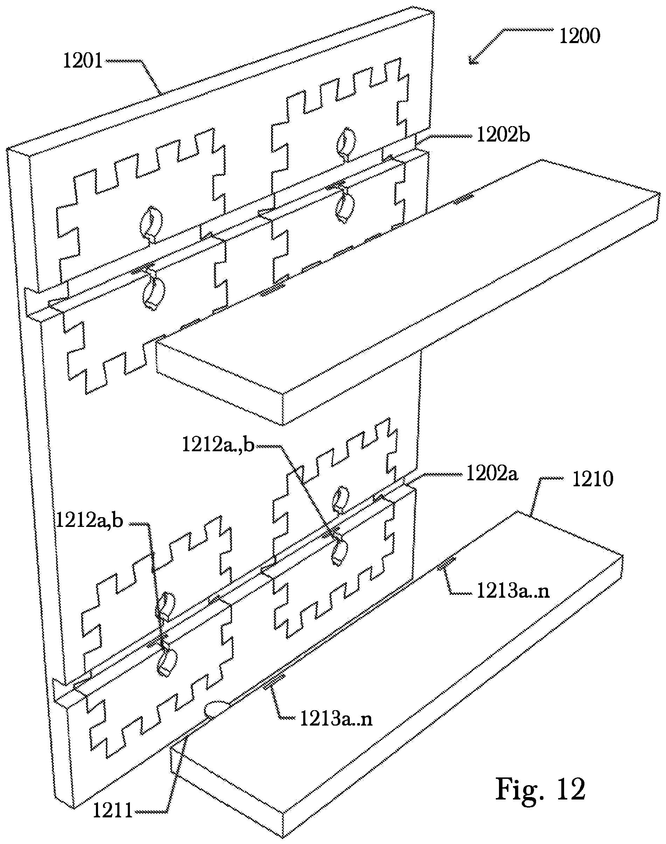

**Fig.12** shows an example embodiment for bookshelf made from fiberboard or hollow fiberboard 1200.

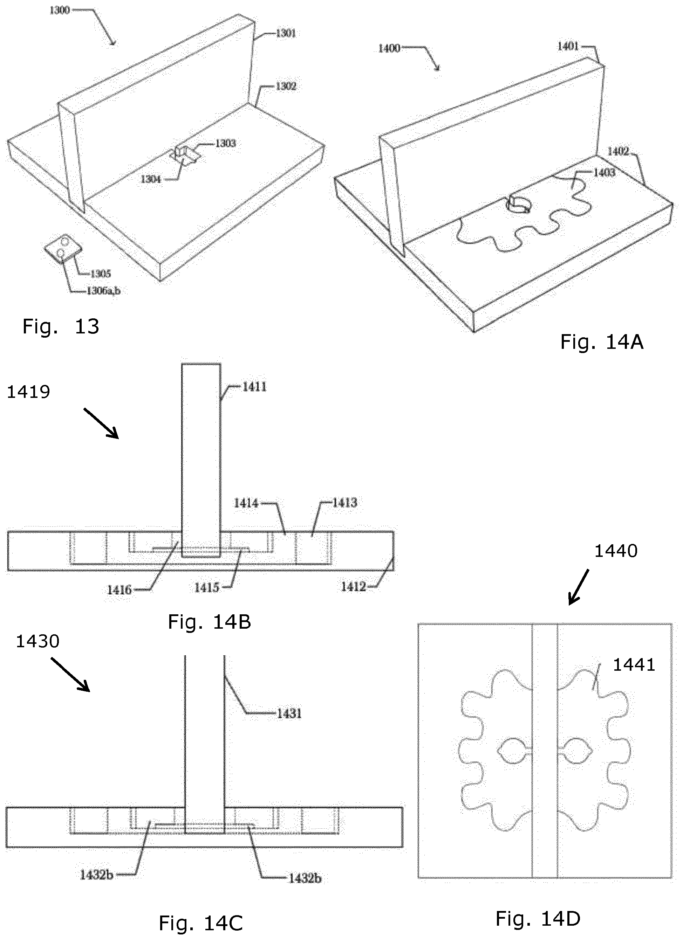

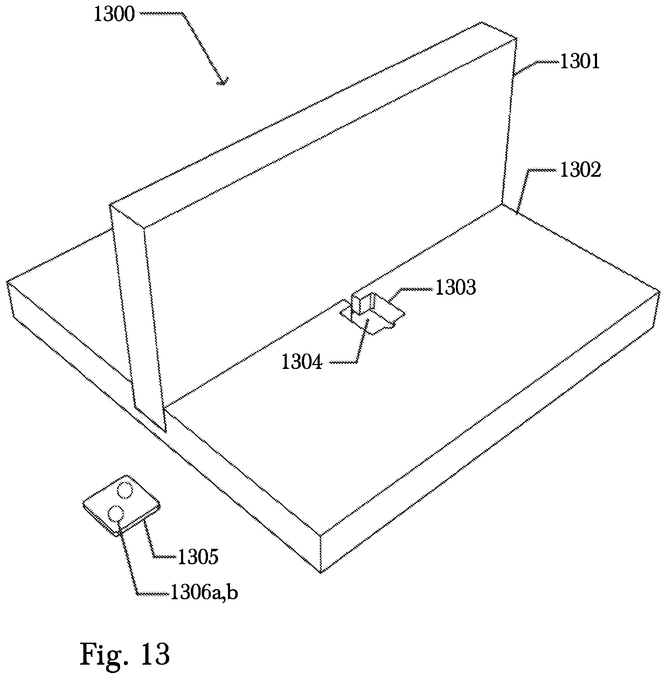

**Fig. 13** shows an embodiment of a joint of two boards using an alternate shape for a token.

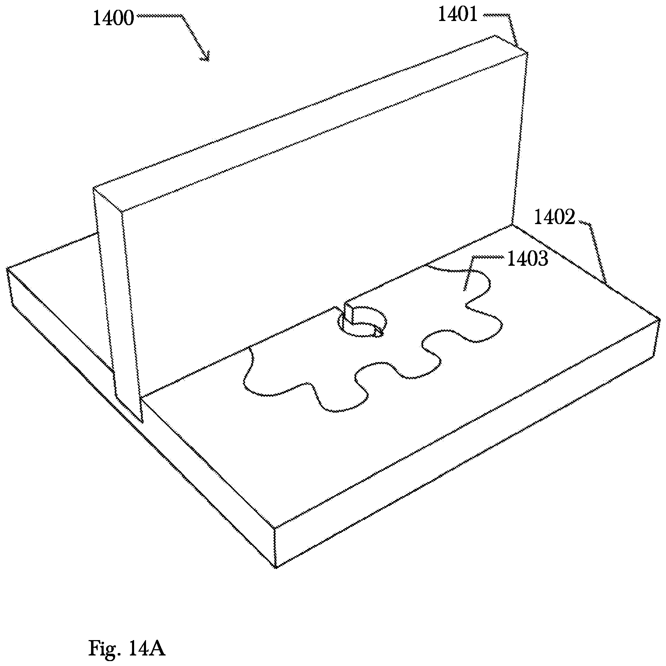

**Fig. 14A-E** show various perspectives of another insert embodiment.

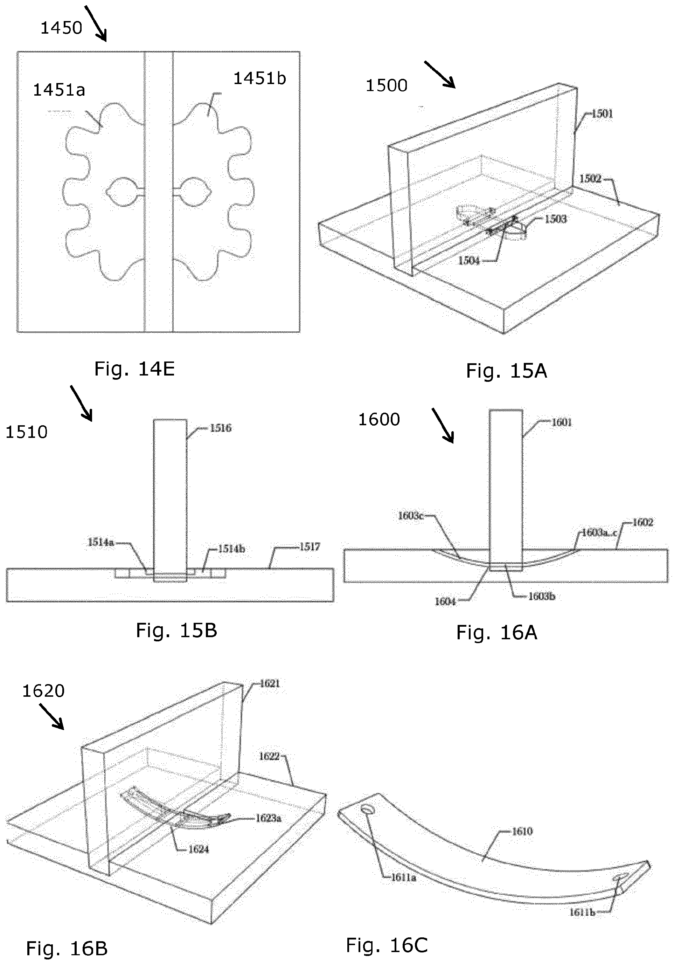

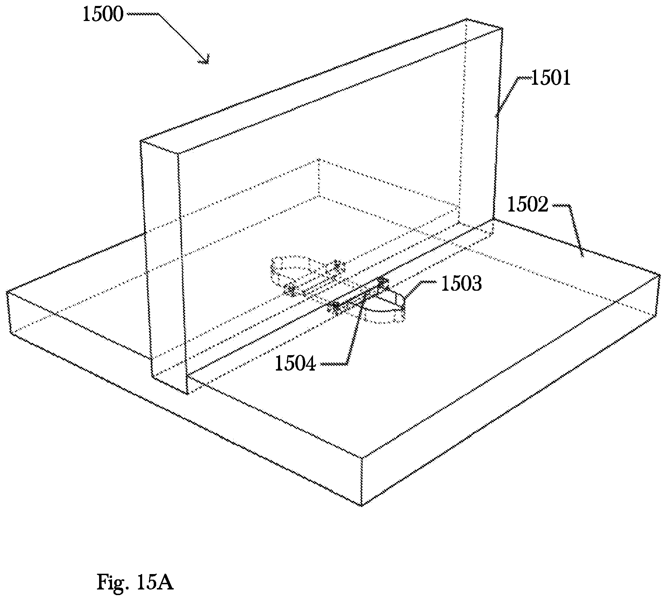

**Fig. 15A-B** shows two different perspective views of an alternate embodiment that requires use of an insert instead of cutting the channel under the other groove.

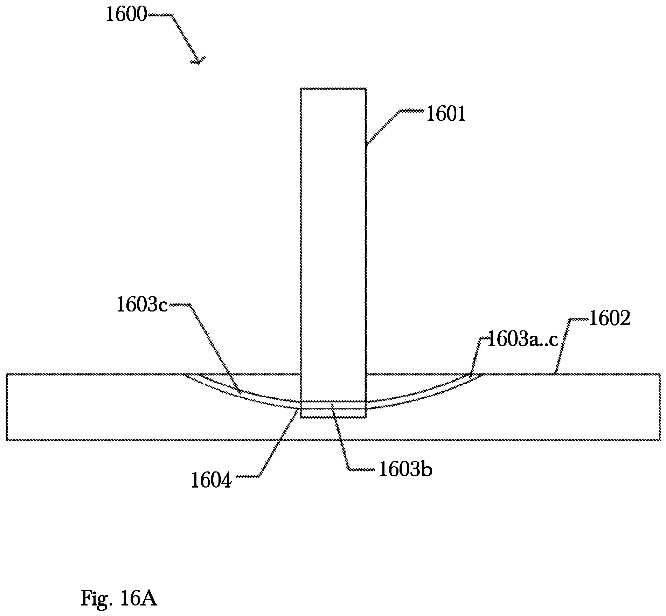

**Fig. 16A-C** shows three different perspectives of yet another embodiment using a curved insert.

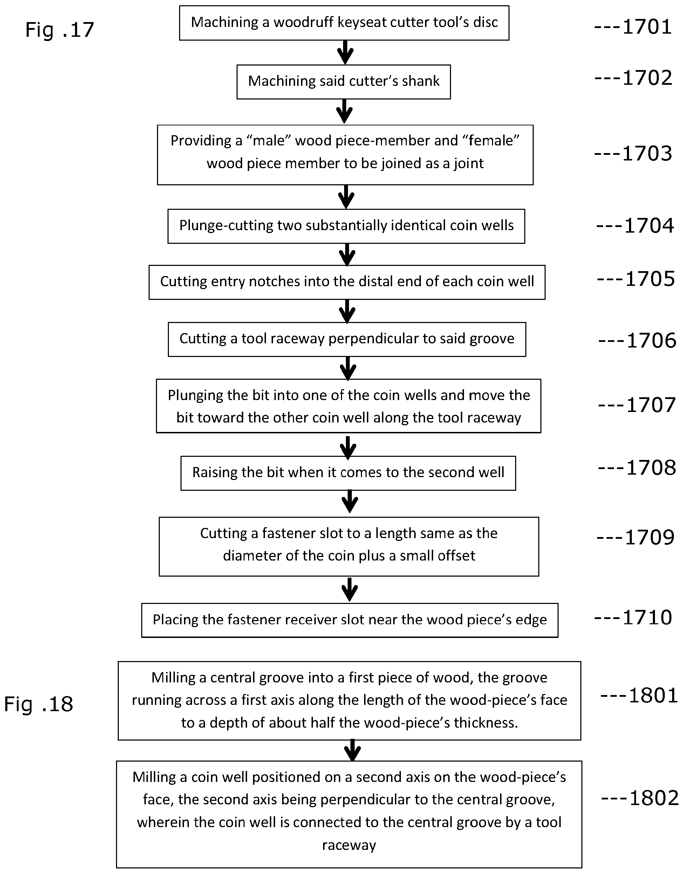

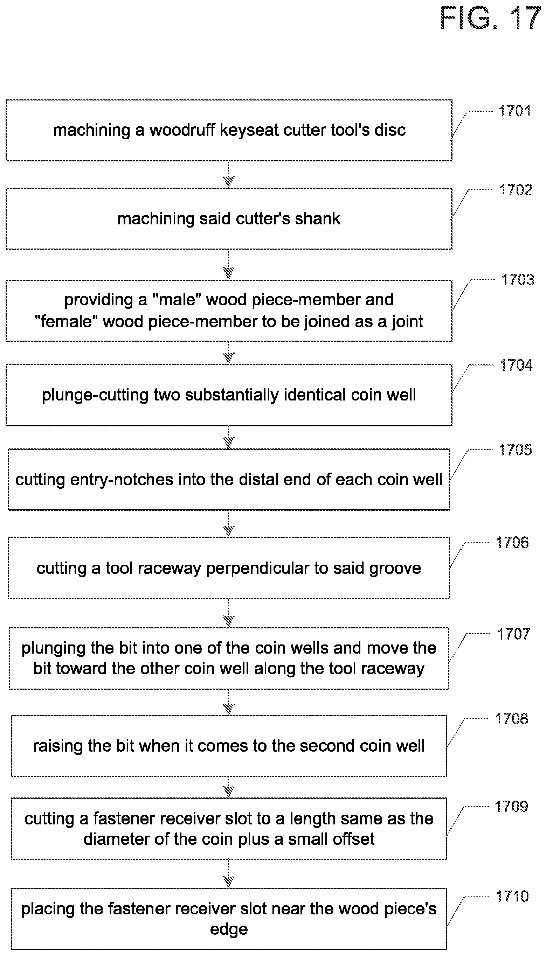

**Fig. 17** shows a flowchart of a method of creating a furniture joint according to an example embodiment.

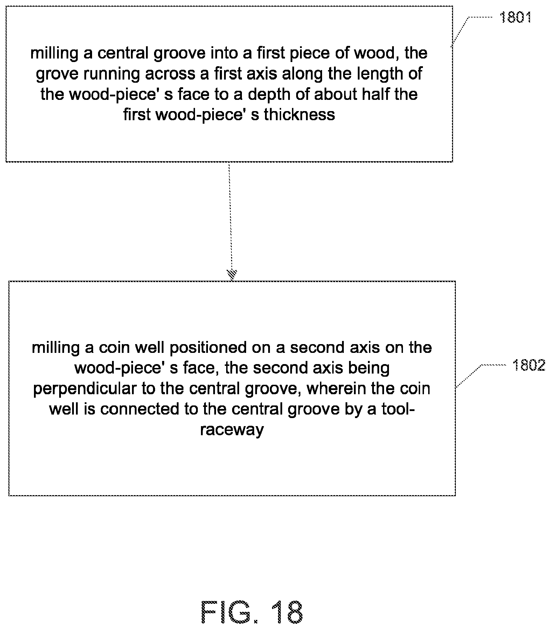

**Fig. 18** shows a flowchart of another method of creating a furniture joint according to an example embodiment.

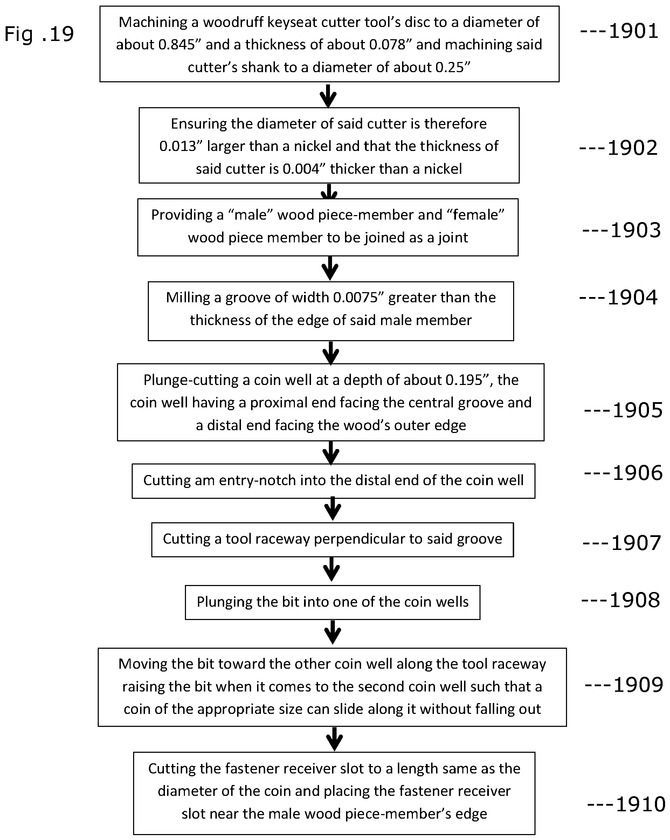

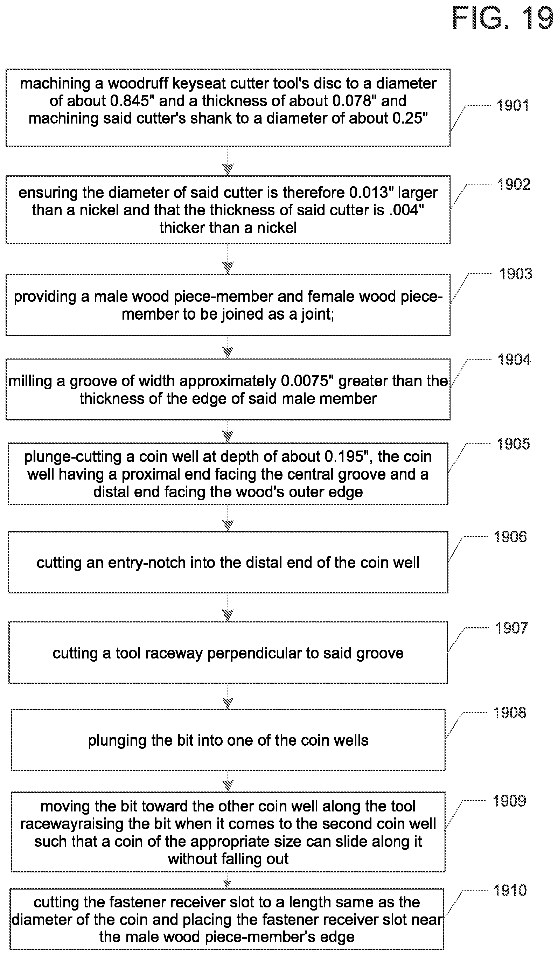

**Fig. 19** shows a flowchart of yet another method of creating a furniture joint according to an example embodiment.

### DETAILED DESCRIPTION

One or more different aspects may be described in the present application. Further, for one or more of the aspects described herein, numerous alternative arrangements may be described; it should be appreciated that these are presented for illustrative purposes only and are not limiting of the aspects contained herein or the claims presented herein in any way. One or more of the arrangements may be widely applicable to numerous aspects, as may be readily apparent from the disclosure. In general, arrangements are described in sufficient detail to enable those skilled in the art to practice one or more of the aspects, and it should be appreciated that other arrangements may be utilized and that structural, logical, and other changes may be made without departing from the scope of the particular aspects. Particular features of one or more of the aspects described herein may be described with reference to one or more particular aspects or figures that form a part of the present disclosure, and in which are shown, by way of illustration, specific arrangements of one or more of the aspects. It should be appreciated, however, that such features are not limited to usage in the one or more particular aspects or figures with reference to which they are described. The present disclosure is neither a literal description of all arrangements of one or more of the aspects nor a listing of features of one or more of the aspects that must be present in all arrangements.

A description of an aspect with several Any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the aspects, and does not imply that the illustrated process is preferred. Also, steps are generally described once per aspect, but this does not mean they must occur once, or that they may only occur once each time a process or method is carried out or executed. Some steps may be omitted in some aspects or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other aspects need not include the device itself.

Techniques and mechanisms described or referenced herein will sometimes be described in singular form for clarity. However, it should be appreciated that particular aspects may include multiple iterations of a technique or multiple instantiations of a mechanism unless noted otherwise.

### Definitions

The term "push tool raceway" as used herein means a thin slot along-&-through which the tool travels while pushing the nickel along the coin slot. The push tool may be any thin hard poker device such as a fork tine, tweezers, handle, hairpin, chopstick, straightened paper clip, needle, screwdriver, awl, or similar "tool," or even a fingernail.

The term "coin well raceway" as used herein means the milled plane along which the coin (or biscuit) will move during assembly and disassembly, said raceway (space) being on the same plane as the push-tool raceway (and, in some parts, push-tool raceway and coin-well raceway are used interchangeably, as the push-tool and the coin often move together along the same plane during assembly and disassembly). The raceway is interchangeable with coin-well distance **816** and lies on the same plane.

The term "female part thickness" as used herein means the thickness of material female part/wood piece/panel is constructed from.

The term "male part thickness" as used herein means the thickness of material male part/wood piece/panel is constructed from. This dimension **906** must be longer than the nickel's diameter.

The term "tool raceway width" as used herein means the width of push tool raceway (must be at least the diameter of the modified Woodruff keyseat cutter's neck, and should be no bigger (or marginally/nominally larger width)). Raceway width **818** is the distance between the two cantilever overhang **814** ends.

The term "offset" as used herein means the additional parameter size/allowance to let the moving parts of the assembly pass by each other. This measurement is +0.1905mm / 0.0075" and is a preferred embodiment.

The term "no-break distance" as used herein is also called the raceway overhang distance and means the minimum thickness of material required so as not to break (so the furniture assembled will not break) under normal use & ordinary stress. Specifically, the thickness of the wood just above the nickel (the fastener) will allow the joint (and the furniture held together by said joint) to tolerate the stress of its own weight and manipulation (when lifted)). This measurement will be particularly valuable when discussing the "overhang thickness" **812.**

The term "minimum overhang" **814** as used herein means the length of the shortest part of the coin raceway overhang, at the edges of the push tool raceway, measured from the beginning of the central female part groove to the beginning of the coin-well. Must be at least the "no-break-distance" and should be about 30% of the coin's diameter.

The term "coin well depth" as used herein means how deep the bottom of the coin-well (and raceways) are cut into the female part **808.**

The term "coin well (full) distance" as used herein means distance from the edge of the male part groove to the center of the coin-well **816.**

The term "push tool entry notch" as used herein (and as featured in Figs. 3A and 3B) means the optional 'extra hole/depression' [in preferred embodiment per Fig.3] on the distal end of each coin-well, wherein the user places her push-tool to access [push] the nickel. This is the [additional] point where the user can dig his/her tool into the wood to "get to" the nickel (in addition to the usual offset). The notch isn't absolutely necessary, as a thin push-tool can be manipulated within the coin-well to access a coin (given the offsets). *Note: offset in preferred embodiment is +0.1905mm / 0.0075"

The term "push tool notch length" as used herein is notch with a diameter of said notch **820** being entirely discretionary; in manufacture, one uses the same bit as used for the push tool raceway to mill this notch.

The term "male part groove depth" **804** as used herein means how deep the bottom of the groove for the male part should be cut. Must be smaller than female part thickness - no-break-distance, which puts a lower limit on female part thickness.

The term "raceway overhang" **814** as used herein means a minimum length for the part of the assembly next to the push tool raceway that hangs over the coin raceway and holds the coin in place when the joint is fully assembled. This "overhang" should be strong enough to hold the entire furniture underneath (and/or around) the joint, as must be the overhang thickness **812.**

The term "male part slot distance" **904** as used herein means the distance from the edge of the male part to the closest edge of the coin acceptance slot (aka slot in male part).

The term "male part slot length" **908** as used herein means the minimum length of the coin acceptance slot in the male part. This length can be somewhat larger without causing the assembly to fail.

The term "male part thickness" **906** as used herein means the depth of the male part of the joint; the wood panel which fits into the female piece's central groove.

The term "Woodruff Keyseat Cutter" as used herein means a brand of tooling, *to wit,* a specialized router bit, aka a slot cutter bit, herein machined to the specifications enumerated *supra* and *infra* to an unusual size and shape, to mill the grooves and slots to create the enclosed invention.

### Detailed Description of Exemplary Embodiments and Aspects

The present invention discloses a unique modification of biscuit joinery. The instant invention creates two-way slots, allowing a shelf joint to be fastened with a common nickel (or similar coin or disc). Rather than using a limited biscuit cutter/biscuit joiner, the instant method discloses use of a router with a specialized router bit (aka slot cutter bit); the slot cutter on the router [when the bit is machined in the following way disclosed in the present invention, and then configured and used in the following way disclosed in the present invention] allows a common U.S. 5¢ piece to become the spline/plate/biscuit joining the two wood pieces/panels, thereby allowing rapid assembly & disassembly of wood furniture.

In some embodiments, the method of manufacture features an angled blade which is spring-loaded into a standard saw-blade, which jets out and cuts a slot into a wood panel/piece, so a biscuit will fit into one or both sides (depending on what's being joined). The biscuit may be optionally further glued.

The angle of the cut is paramount: Usually the angle is 90°, but one may cut miters together. The depth of the cut must be precise for the instant "nickel biscuit" method to work, since the nickel biscuit will not expand like wood, and it will not "fix itself' via adjustment as with wedge-shaped wood biscuit.

In some embodiments, the method of manufacturing the milling tool (producing the tool that mills the fastening slots) is disclosed. It should be noted that the present disclosure assumes the disc used is a common U.S. nickel, diameter of about 21.13mm / 0.832" and thickness of about 1.8796mm / 0.074". Same relative proportions may be used, however, so any appropriate disc may be used.

According to one aspect of the embodiment, an existing Woodruff Keyseat Cutter **602,** or similar cutting tool that is slightly larger (about 0.3302mm / 0.013" larger) than the diameter and thickness of a nickel, is used in the present disclosure. The Woodruff Keyseat Cutter **602** is used by cutting the disc **604** down to just slightly larger than a nickel. Specifically, to a diameter of 21.463mm / 0.845" and to a thickness of 1.9812mm / 0.078". The diameter of the cutter will therefore be 0.3302mm / 0.013" larger than a nickel and the thickness of the cutter will be 0.1016mm /.004" thicker than a nickel. Other acceptable coins or disks require similar offsets. Ideally, the tool diameter should be about 1.56% larger than the coin, and the tool thickness should be about 5.40% thicker than the coin. These proportions should make the enclosed fastening method work for any customary furniture joint size.

According to another aspect of the embodiment, the neck/shaft **606** of the Woodruff Keyseat Cutter **602** must also be machined down. For the nickel-sized slot cutter, the original shaft is 12.7mm / 0.5" in diameter. Machine the neck of this shaft **606** to a diameter of 6.35mm / 0.25" (roughly a third (30.01%) of the diameter of a nickel). This resulting 6.35mm / 0.25" diameter neck **606** will then clear the push tool raceway **116** (said raceway **116** is milled with a standard 6.35mm / 0.25" diameter end tool). It should be noted that raceway **116** and coin well raceway **816** and female coin slot are often used interchangeably, as the slot is naturally the end-resting position and a natural exit-position for the coin along its 'raceway' **116.**

In another embodiment, the method of milling the wood panels is disclosed. It should be noted that the present disclosure assumes the disc used is a common U.S. nickel, diameter of about 21.13mm / 0.832" and thickness of about 0.074".

According to one aspect of the embodiment, a female receiving wood piece is disclosed. Specifically, the female component's central groove **804** is cut to a depth approximately half the thickness of the material (herein plywood in preferred embodiment). The width of the groove **806** should match the thickness of the male part **906** in addition to a small offset (+0.1905mm / 0.0075" in preferred embodiment). At the joint point, the "tool raceway" **816** is cut across (perpendicular) to the central groove **806,** from the groove **806** to the end of the coin-well **810.** The raceway **816** total distance is typically the coin diameter plus an additional 1/3 the coin-disc-fastener diameter (in a preferred embodiment of the invention, this measurement is about 21.168mm / 1.109"). The raceway depth is cut at a depth (from the surface) about 1/2 the depth of the male part groove (at the approximate midpoint into the wood). In the usual case, the groove will be perpendicular to the male part groove, but it could be angled and still function.

Another aspect of the embodiment is a when two symmetrical mirror image coin wells **108** is cut to the diameter of the coin plus a small offset (+0.1905mm / 0.0075"), at the same depth as the tool raceway **116.** The wells **108** are circular and positioned approximately 3.505mm / 0.138" from the central groove (approximately 1/6 the coin's diameter away from the male central groove in the case of a nickel). The fastener slot (raceway) **116** is then cut using the following method: the fastener slot is cut using the special router bit described earlier in the specification; the bit is plunge into one of the coin wells; the bit is moved toward the other coin well along the tool raceway; and the bit is raised when it comes to the second coin well. This movement cuts a strip out of the middle of the female part, crossing the male part groove, such that a coin of the appropriate size can slide along it without falling out.

Another aspect of the embodiment discloses milling the center joint (the male wood piece). Practically, on the male wood piece, the fastener receiver slot **902-908** is cut the length of the diameter of the coin plus a small offset (+-0.1905mm / 0.0075") and the width of the thickness of the coin plus a small offset (+0.1905mm / 0.0075"). The fastener receiver slot **902-908** is placed near the wood piece's edge (the piece to be joined), at a distance from the proximal edge corresponding to the depth of the top of the fastener slot **116,** in the female part. The center of the slot should match up with the center of the female part's tool raceway **116** (groove for coin-pushing tool).

The shape of the wood pieces to be joined is illustrated in the preferred embodiment shown in **Figs. 1A** through **2B** which features a basic half-lap joint. Cross lap joints are also available for middle pieces, wherein both pieces of wood continue beyond the joint, as shown in **Figs. 3A** and **3B****.** In addition, any appropriate joint that utilizes the herein-disclosed nickel-biscuit method may be used (e.g. bevel cut scarf joints, miter-cut scarf joints, tabled lap joints, finger and tab joints, shelf-housing joints, etc.). The nickel biscuit method, and resulting apparatus furniture joint, works for all these joint varieties.

According the present disclosure, measurements of a preferred embodiment of a 25.4mm / 1" thick plywood joint (wherein both wood pieces are 25.4mm / 1" thick plywood), are as follow: diameter of coin preferred measurement is 21.18mm / .834"; thickness of coin preferred measurement is 1.879mm / .074"; width of push tool raceway must be at least the diameter of the modified Woodruff' Keyseat cutter's neck/shaft, and should be approximately 6.477mm / .255"; the allowance to let moving parts of the assembly pass/slide by each other (aka 'the offset') preferred measurement is 0.1905mm / 0.0075"; thickness of material required so as not to break under normal stress (aka the "no-break distance") preferred measurement is 5.08mm / 0.2"; the length of the shortest part of raceway (the overhang) preferred measurement should be between 1/3 and 1/4 of the coin's diameter, or 6.345mm /.25" (which equal total distance of overhang from central groove to coin-well); the depth of coin-well (and raceway) preferred plane is at (below surface): no-break distance plus coin thickness plus offset; the diameter of coin well is the coin diameter plus offset; the distance from edge of male part groove to center of coin-well preferred embodiment is the coin diameter divided by 2 plus the overhang; the length from edge of coin well to end of notch should be the raceway width divided by 2; the height of slot preferred embodiment should be the coin-well depth plus the no-break distance; the central groove in male wood part preferred embodiment is the male part thickness plus offset; the raceway overhang thickness is preferred as no-break distance; the preferred distance from edge of male part to closest edge of coin acceptance slot is no-break distance; the preferred width of coin acceptance slot [in male wood piece] is the coin-thickness plus the offset; the min length of the coin acceptance slot in male part is the coin-diameter plus offset (this part may be a bit bigger without furniture fastening failure).

In another embodiment, a method of furniture assembly is disclosed. Specifically, if only one nickel/coin/disc **102** is fastened, the user positions the male piece **104** into the central groove **112** of the female piece **110,** then drops the coin **102** into either of the two coin wells **108,** then uses her tool **214** to push the nickel **102** along the raceway **116** into the male central slot **106.** The nickel **102** should not be pushed fully into the slot **106** (namely, some of the coin should still remain under the female piece's **110** raceway overhang **218**)**.** If the coin mistakenly goes completely inside the male part's slot **106** and only one coin is used, the fastener will no longer be able to join the male **104** and female **110** parts, as the coin **102** would then be wholly concealed in the male slot **106.** Two nickels/discs would solve the above problem, and the two-coin fastening method works with the herein-disclosed invention.

In another aspect of the embodiment, a method of furniture disassembly is disclosed. Specifically, if only one nickel/coin/disc **102** is fastened, the user pushes the nickel **102** along the raceway **116** until it is fully inside the male wood piece **104** (inside the slot **106**), then lifts the male piece **104** away from the female piece **110,** and then shakes or otherwise drops the nickel **102** out of the male piece **104.**

According to another embodiment of the present invention, a single-coin embodiment is disclosed. Specifically, if only one nickel/coin/disc is to be used as a fastener (**Figs. 1A** - **2B**), there are three significant differences in manufacture, component design, method and assembly, while discussed in the specification, may be emphasized as follows: for the size/location of the male member slot **110,** it is half the size of the male member **104,** and cut a distance from the edge of the wood equal to the width of the slot; the male member **104** gets a dado on the side opposite to its coin slot, to fit into the thinner slot in the female member **110** and produce a corner joint without overhang; manufacture-method (slot-cutting) is tailored to the 'single coin' fastening apparatus & method, in that the modified-cutter is inserted into the singular coin slot **108** and moved through the raceway towards the male member groove, far enough that at least half the cutter's diameter extends into the male member groove, cutting the coin slot and creating the overhang. Next, the cutter it is moved back along the same path to the position of the singular coin well, from whence it is raised back upwards.

An alternative embodiment of the present invention discloses a table wherein at least one table leg is fastened to the bottom side of the table-top via one or more coin-shaped plate biscuits. Wherein at least one coin well and at least one slot are milled into the bottom side of the tabletop, such that a coin may be placed in the coin well, then slid along an adjacent coin-raceway into a coin-sized slot in the table leg, such that the coin straddles the leg and the table by being simultaneously positioned in both the leg slot and the raceway. Wherein said raceway has a sufficient overhang of at least ten per cent of the tabletop's thickness, such that the coin holds the table together even if said table is lifted by its top.

**Fig. 10A** shows another example embodiment of a block that is machined with dovetail style edges inserted into a fiber board furniture piece. **Fig. 10A** shows a block **1001** that is machined or molded with dovetail edges in this example that can be inserted into a fiberboard furniture piece later. The edges of the block could be alternatively made square, rectangular, half round, three-quarters round, or another shape, depending on what makes it most efficient in a particular application (not shown here). The block could comprise of plywood, solid wood, a plastic piece or a composite fiber material as an insert that is added into some kind of fiber material, or hollow fiberboard that will be shown in an assembly later in **Fig 12****.** The coating could be of full thickness or partial thickness and could, for example, be melamine-plated or coated board or printed paper with melamine coated board that looks like fake wood. This block insert would be ideal because it goes under the plating or coating so it would be completely invisible to the eye but it would provide additional strength to hold the biscuit (or token or nickel) when the pieces are joined during assembly. **Fig. 10B** shows the other example embodiment **1020** of the block **1021** joined using a token having different shapes.

**Fig. 10C** shows the other example embodiment illustrating how the token or biscuit is pushed in or pulled out using a tool. Tool **1031** is used to engage with holes **1034a-b** in biscuit **1032** while the biscuit is within opening **1032.** The biscuit **1032** is slid into a slot (not shown) in **1033.** **Fig. 10D** shows the other example embodiment in which the joint is disassembled. **1043.** **Fig. 10D** also shows the slot **1042** in piece **1041** where the biscuit (or token or nickel) slides into slot **1042** and holds two pieces together. **Fig. 10D** shows the joint disassembled where the tongue **1041** comes out of the groove.

**Fig. 11A-B** show two perspectives of yet another embodiment providing a joint using a two-nickel or two-token assembly. **Fig. 11A** shows an overview **1100** of the two-biscuit (or token or nickel) assembly. This assembly has two openings for dropping in biscuits (or tokens or nickels) to join in a single slot. The insert **1101** has a slot **1111** to receive the nickel. **Fig. 11B** shows one nickel being pushed in from one side using the push tool **1113** and a second nickel in slot **1112** (The second nickel is currently not shown).

**Fig.12** shows an example embodiment for bookshelf made from fiberboard or hollow fiberboard **1200.** **Fig. 12** shows a bookshelf made from fiberboard or hollow fiberboard **1200.** Hollow fiberboard may have fiberboard on the outside and a melamine, lacquer, or Styrofoam or other suitable and cost-effective filling and coating to fill it out. The hollow fiberboard can have blocks **1203a..n** and **1202a..n** (only **1202 a, b** shown here) inserted into the side of the bookshelf **1201.** The hollow fiberboard **1201** also has groove **1202b,** shelf board **1210** (which is also shown the same way with inserts **1213a..n** in this case there are two inserts), ridge **1211** that matches up into groove **1202a.** The nickels in this exemplary system can be pushed up on the holes to lock the board in, thus providing stability to the shelf.

Other furniture, bookshelves, etc. can be made in a similar way. These inserts can be made from hardwood, high-density resin-pressed fiber that provides strength, plywood, plastic, or other stronger materials that are suitable. The inserts are then integrated into the fiberboard (or similar) that forms the rest of the furniture. This exemplary method of furniture production creates often lightweight furniture that saves on materials.

**Fig. 13** shows an embodiment of a joint of two boards using an alternate shape for a token. **Fig. 13** shows an overview **1300** of a joint of two boards: **1301** and **1302.** Said joint has an opening **1303** for a square or rectangular biscuit (or token or nickel). Token **1305** shows such a biscuit (or token or nickel). The token has two holes in this example **1306a** and **1306b.** This allows the biscuit (or token or nickel) to be pulled out. The holes **1306a** and **1306b** are not perfect rectangles and instead have slightly rounded corners, so as to be easily routed out without requiring additional treatment or processing. The biscuit (or token or nickel) **1305** would reflect the shape of the hole **1304.** This way it would be easily injection molded into a plastic lock that could be inserted into a piece of furniture that is made from fiberboard or similar materials.

**Fig. 14A****-F** show various perspectives of another insert embodiment. **Fig. 14A** shows another insert in overview **1400.** Insert **1403** has modified dovetail edges in order to better grab the surrounding material. Typically, this insert could be comprised of a fiberboard injected material or machined solid wood or ply wood, maybe hollow, details are not shown here. In the bottom section **1402,** the top section could be manufactured as a light weight hollow board (or full fiber board) without having all these details (could be a butt edge or a half edge).

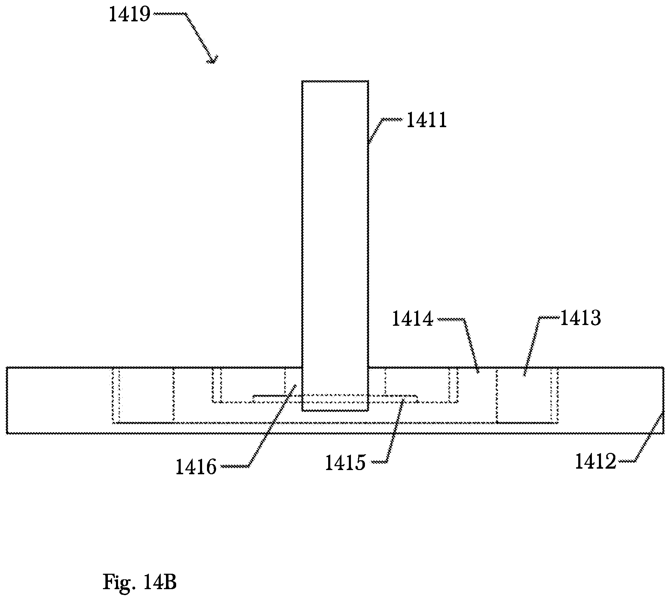

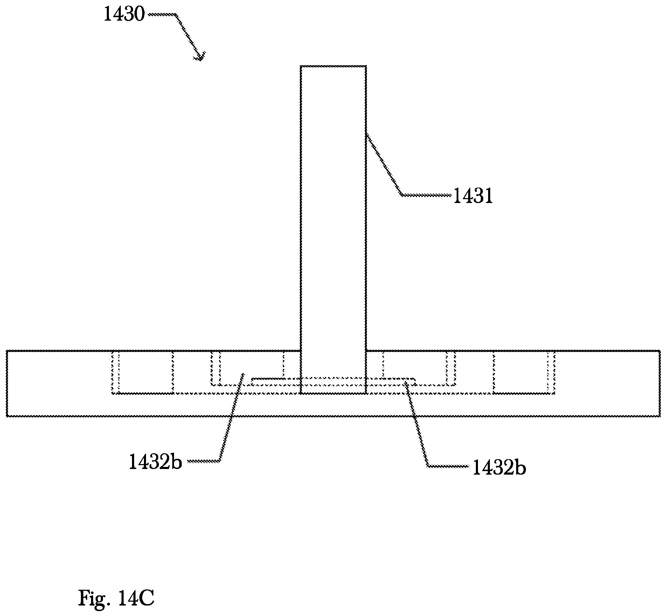

**Fig. 14B** shows an arrangement **1419** in which there is an insert that spans both sides of the double-coin join, that has a groove going through the middle, and one in which there are two separate inserts, one insert on each half. In this instance, the inserts don't go through the full depth of the material in the bottom part **1402** as is shown in **1412.** The insert **1413** only goes through a partial depth of **1412.** The groove of **1416** goes to the opening that receives **1411.** Also shown is channel **1416** where the biscuit (or token or nickel) slides into **1411,** the opening **1414** that receives the biscuit (or token or nickel), and the channel in piece **1415** where said biscuit (or token or nickel) slides in. **Fig. 14C** shows a similar arrangement **1430** as above, but the two halves are two separate pieces **1432a and 1432b** that don't go under the top piece **1431** that is inserted.

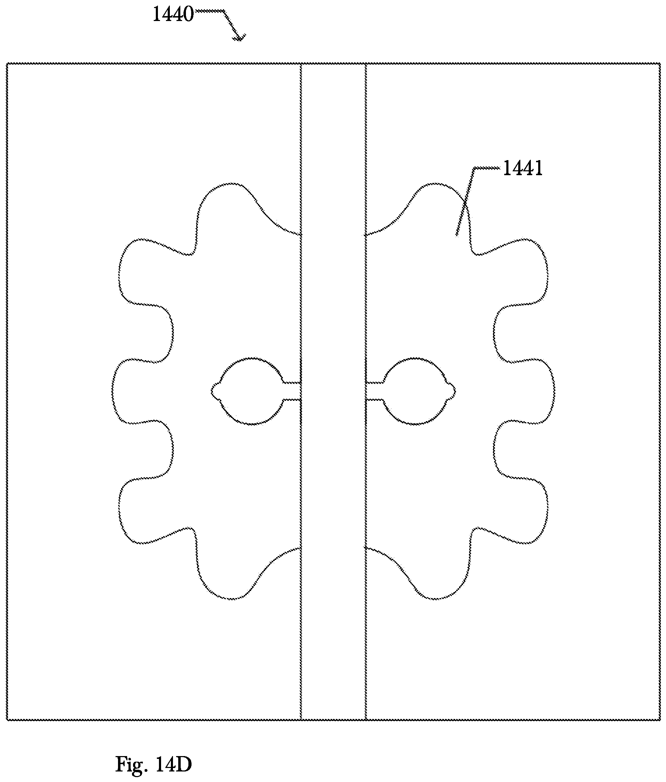

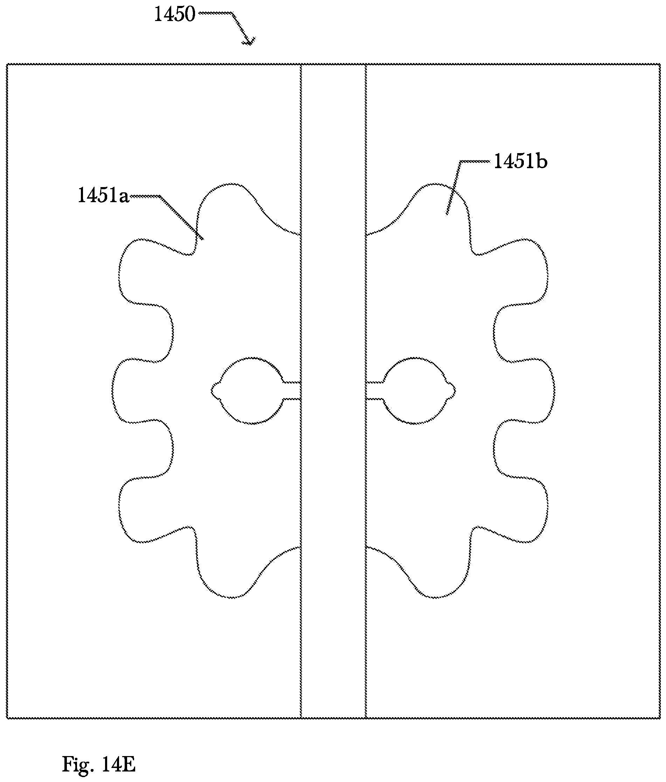

**Fig. 14D** shows another arrangement **1440** where **1441** is one piece going across the slot. In contrast, **Fig. 14E** shows a similar arrangement **1450** having the same top view as **Fig. 14D** showing the insert having two separate pieces **1451a** and **1451b.**

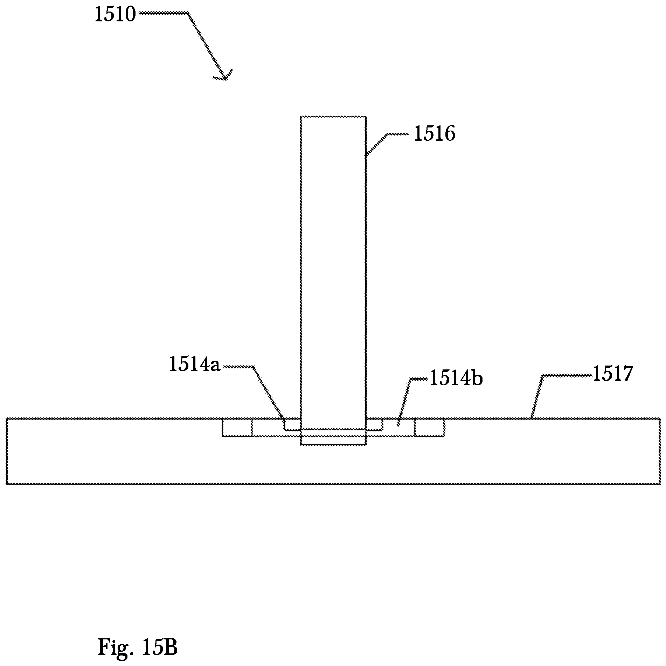

**Fig. 15A-B** shows two different perspective views of an alternate embodiment that requires use of an insert instead of cutting the channel under the other groove. **Fig. 15A** shows a different approach that requires using an insert instead of trying to cut the channel under the other groove. In overview **1500,** there is a butt-joint piece **1501** inserted into piece **1502.** The token opening **1503** is shown for a round token in this example, but could be used for any shape token. There is an opening cut out that is filled with a cover plate **1504;** this cover plate could be screwed or glued in at production time or inserted while making piece **1502** from fibrous material. **Fig. 15B** illustrates an arrangement **1510** shows a cross section of the joint showing two pieces. Two biscuits (or tokens or nickels, used interchangeably throughout) can be used to hold the insert **1516** in place in the bottom piece **1517.**

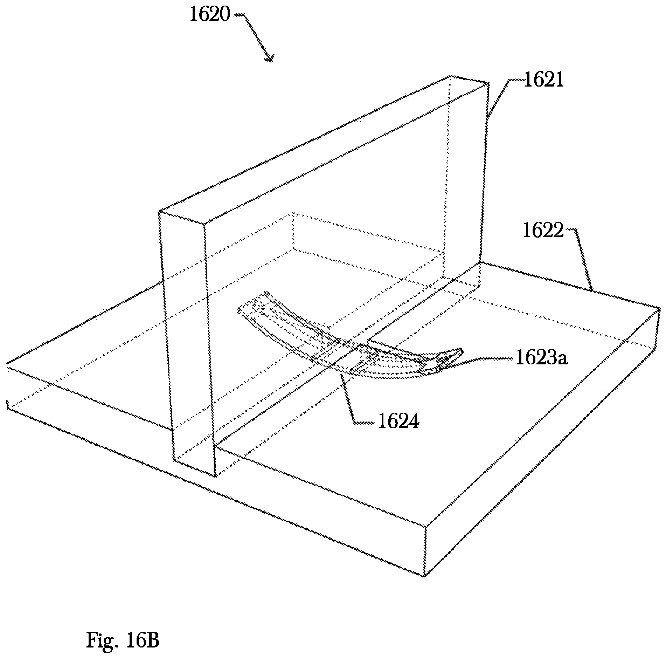

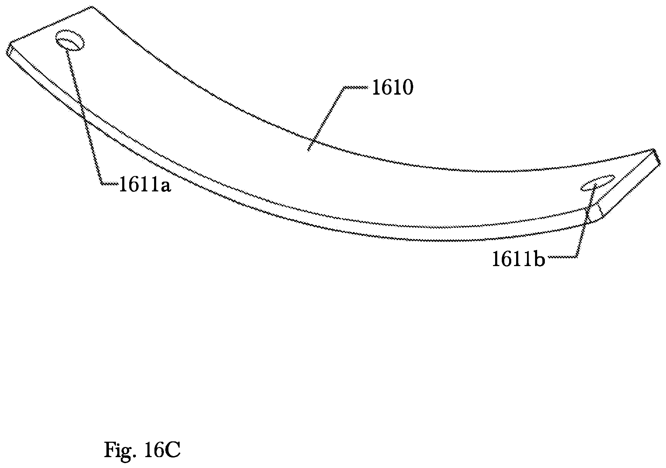

**Fig. 16A-C** shows three different perspectives of yet another embodiment using a curved insert. **Fig. 16A** shows yet another approach which has a curved channel going through both the bottom plate **1602** and the joint plate **1601.** Instead of a token this exemplary system would use a curved metal strip **1604.** The channel would have three sections **1603a..c:** two of these sections are located in the bottom piece **1602** and one is located in the insert piece **1601.** This approach requires a 5-axis CNC router to cut. **Fig. 16B** shows this exemplary arrangement **1620** from a more isometric point of view. In this arrangement, piece **1621** is inserted into base piece **1622** where a curved insert **1624** is utilized, and where the insert includes a hole **1623a** to assist in its insertion. **Fig. 16C** illustrates an example metal strip **1610** would have two extraction holes **1611a** and **1611b.** Those holes **1611a** and **1611b** can be used for a tool to grab the strip and pull it out of the groove.

In one possible embodiment, a system of assembling a furniture joint with nickels (or biscuits or tokens) is needed. Said furniture assembly system comprises of a first piece of wood material that has a groove running across a length of the wood material's face (said groove manufactured to a depth of about half the first wood material's thickness), and at least one coin well positioned on a second axis on the wood piece's face (said second axis being perpendicular to said groove). In this system said coin well is connected by a tool-raceway. Said tool-raceway runs along the second axis (perpendicular to said groove) and said coin wells are positioned about half as deep in the first wood piece as is the central groove. The coin wells are accessible from the central groove via a raceway slot; the slot is substantially covered by a raceway overhang. This system further comprises a second wood piece whose edge thickness is nominally smaller than the width of the first wood piece's central groove in such a way that the second wood piece's entire edge fits into the groove. The second wood piece has a central coin slot positioned at a height and position such that, when said second wood piece is nestled into the central groove of said first wood piece, said central coin slot lies on the same plane-height as the plane-height of said first wood piece's raceway and at the same central position as said raceway slot. A coin may be placed into either of the coin wells and then subsequently pushed along the raceway to the point where the wood pieces meet in manner that causes the coin to straddle the two wood pieces and rest partially under the raceway overhang, thus holding the wood pieces together. Said coin thereby functions as a plate biscuit joiner.

In another example embodiment, the coin can be any disc with sufficient strength and texture to fit in a coin well, slide along the raceway and the slot, and hold said wood pieces together per said method. In the example embodiment, the coin or disc has at least one hole, allowing said coin to be pulled out with ease using a tool that can enter a hole. In some cases, the thickness of the raceway overhang is between about 15% and about 30% of the first wood piece's thickness. In some cases, the thickness of the raceway overhang is about 20% of the first wood piece's thickness.

In an alternate embodiment, the depth of the tool raceway equals the overhang's thickness plus the coin's thickness plus an "offset" of between 0.5% and 1.3% of the first wood piece's thickness. The second wood piece's coin slot is positioned at the same height as the raceway's depth. In the alternate embodiment, the depth of the tool raceway equals the overhang's thickness plus the coin's thickness plus an "offset" of around 0.75% of the first wood piece's thickness. The second wood piece's coin slot is positioned at the same height as the raceway's depth.

In yet another example embodiment, said slot and said groove are larger than the pieces that fit inside them by an "offset" amount. The thickness of said overhang is the "no-break-distance." Both wood pieces are comprised of one-inch plywood that has one-inch edges, and the coin has a diameter of about 0.834" and a thickness of about 0.074." The first wood piece's central groove is about 25.590mm / 1.0075" wide (thereby being nominally wider than the male wood piece's edge), and the diameter of each coin well is about 21.374 / 0.8415." The tool raceway and the coin wells rest at a depth of 6.959mm / 0.274," the width of said raceway is about 6.477mm / 0.255", the offset is about 0.1905mm / 0.0075", and the "no-break-distance" is about 5.08mm / 0.2" in height (wood thickness). The length of the overhang is about 6.35mm / 0.25". The depth of said coin well and said raceway is equal to the no-break-distance plus the coin-thickness plus the offset. The diameter of the coin wells equal the coin diameter plus the offset.

In other example embodiments, a method for milling slots in wood so a U.S. nickel 5¢ piece functions as a biscuit joiner is needed. Said nickel has a diameter of about 21.13mm / 0.832" and a thickness of about 0.074." Said method comprises of the following non-sequential steps: machine a woodruff keyset cutter tool's disc to a diameter of about 21.463mm / 0.845" and a thickness of about 0.078"; machine said cutter's shank to a diameter of about 6.35mm / 0.25"; ensure the diameter of said cutter is therefore 0.3302mm / 0.013" larger than a nickel and that the thickness of said cutter is 0.1016mm / .004" thicker than a nickel; provide a "male" wood piece-member and "female" wood piece-member to be joined as a joint; across said female member's face (at a depth of about 11.112mm / 7/16") mill a groove of width approximately 0.1905mm / 0.0075" greater than the thickness of the edge of said male member; using an end mill router bit with a flat bottom, plunge-cut two substantially identical coin wells at depth of about 4.953mm / 0.195" (Said coin wells will each have a proximal end facing the central groove and a distal end facing the wood's outer edge.). To continue the non-sequential steps: optionally cut entry-notches into the distal end of each coin well; at a substantially-central fastening point along said central groove, cut a tool raceway perpendicular to said groove, the length of said raceway being about 1/3 the total diameter of a nickel; plunge the bit into one of the coin wells; move the bit toward the other coin well along the tool raceway, raising the bit when it comes to the second coin well (said movement cutting out a strip from the middle of the Female Part, crossing the Male Part Groove, such that a coin of the appropriate size can slide along it without falling out); on the Male Member (the center piece joint), cut the "fastener receiver slot" to a length same as the diameter of the coin plus a small offset (+0.1905mm / 0.0075") and the width of the thickness of the coin plus a small offset (+0.1905mm / 0.0075"); the "fastener receiver slot" is placed near the wood piece's edge (the piece to be joined), a distance in from the proximal edge corresponding to the depth of the top of the fastener slot in the Female Part; the center of said receiver slot therefore matches up with the center of the Female Part's tool raceway (groove for coin-pushing tool).

In other example embodiments, a furniture joint comprises at least a first and a second piece of wood and both wood pieces have at least one edge. A groove for said second wood piece is milled into said first wood piece such that one edge of the second wood piece is wholly fit into the groove; and wherein disc-style plate biscuits are positioned into disc-slots in both the first and second wood pieces. Said disc-slots lie on the same plane as one another. In some cases, said disc-slots are each covered by an overhang whose thickness is at least 10% of the first wood piece's; in some cases, said disc-slots are each covered by an overhang whose thickness is between about 15% to 25% of the thickness of the first wood piece.

In additional example embodiments, a furniture joint comprises at least a first and a second piece of wood and both wood pieces have at least one edge. A substantially central groove is milled into said first wood piece such that one whole edge of the second wood piece is fit into the groove. A disc-shaped plate biscuit is partially positioned into a slot milled into the first wood piece. The slot is substantially covered by an overhang whose thickness is between about 15% to about 25% of the thickness of said first wood piece. The disc-shaped plate biscuit is simultaneously partially positioned into a slot milled into said second wood piece. The slot rests at same height as the first wood piece's slot, so that the plate biscuit straddles both wood pieces, allowing the overhang to hold the first wood piece fixed to the second wood piece using the disc as a joiner.

In more example embodiments, the depth of the tool raceway equals the overhang's thickness plus the coin's thickness plus an "offset" of about 0.75% of the first wood piece's thickness. The second wood piece's coin slot is positioned at the same height as is the raceway's depth.

In even more example embodiments, the slot and the groove are larger than the pieces that fit inside them by an "offset" amount. The thickness of the overhang is the "no-break-distance" and both wood pieces are one-inch plywood having about one-inch edges. The coin has a diameter of about 21.28mm / 0.834" and a thickness of about 1.8mm / 0.074." The first wood piece's central groove is about 25.590mm /1.0075" wide, thereby being nominally wider than the male wood piece's edge. The diameter of each coin well is about 21.374 / 0.8415." The tool raceway and the coin wells rest at a depth of 6.959mm / 0.274." The width of said raceway is about 6.477mm / 0.255". The offset is about 0.1905mm / 0.0075." The "no-break-distance" is about 5.08mm / 0.2" in height (i.e. 5.08mm / 0.2" of wood-thickness). The length of the overhang is about 6.35mm / 0.25". The depth of said coin well and said raceway is equal to the no-break-distance plus the coin-thickness plus the offset. The diameter of the coin wells equal the coin diameter plus the offset.

In other alternate embodiments, a method of assembling a furniture joint comprises of the following: a first piece of wood comprising a central groove running across a first axis along the length of the wood piece's face, the groove milled to a depth of about half the first wood piece's thickness; a coin well positioned on a second axis on the wood piece's face (the second axis being perpendicular to the groove, said coin well connected to the groove by a tool-raceway, and the tool-raceway likewise running along said second axis); said coin well positioned about half as deep in the first wood piece as is its central groove; said coin well accessible from the central groove via a substantially central raceway slot (said slot substantially covered by a raceway overhang). Said method further comprises a second wood piece whose edge thickness is nominally smaller than the width of the first wood piece's central groove. The second wood piece's entire edge fits into said groove. The second wood piece further comprises a central coin slot positioned at a height and central position such that, when said second wood piece is nestled into the central groove of said first wood piece, said central coin slot lies on the same plane-height as the height of said first wood piece's raceway and at the same central position as said raceway slot. A coin may be placed into the coin well and then subsequently pushed along said raceway to the point where the wood pieces meet, said coin thereby straddling the two wood pieces and resting partially under said raceway overhang. At this point the coin holds the wood pieces together; thus functioning as a plate biscuit joiner.

In yet example embodiment, the coin may be any disc with sufficient strength and texture to fit in the coin well raceway and slot, and to hold said wood pieces together per said method. In some cases, the overhang's thickness is between about 15% and about 30% of the first wood piece's thickness. In the example embodiments, the raceway overhang's thickness is about 20% of the first wood piece's thickness. In the example embodiments, the depth of the tool raceway equals the coins thickness plus an "offset" of between about 0.5% and 1.3% of the first wood material's thickness. The second wood material's coin slot is positioned at the same height as the race way' depth.

In additional example embodiments, the coin well is substantially rectangular with round corners, and the coin is a substantially rectangular plate with one or more holes. In some cases, the racetrack is substantially spherically curved, a curved metal strip is inserted in lieu of a coin, and simple openings replace the coin wells. In the example embodiments, the racetrack and coin well assembly is manufactured as a separate piece from the furniture, and integrated into the furniture as part of the manufacturing process.

In other example embodiments, a method for milling slots in wood so a U.S. nickel 5¢ piece functions as a biscuit joiner is needed. Said nickel has a diameter of about 21.13mm / 0.832" and a thickness of about 1.83mm / 0.074." Said method comprises of the following non-sequential steps: machine a woodruff keyset cutter tool's disc to a diameter of about 21.463mm / 0.845" and a thickness of about 19.81mm / 0.078"; machine said cutter's shank to a diameter of about 6.35mm / 0.25"; ensure the diameter of said cutter is therefore 0.3302mm / 0.013" larger than a nickel and that the thickness of said cutter is 0.1016mm / .004" thicker than a nickel; provide a "male" wood piece-member and "female" wood piece-member to be joined as a joint; across said female member's face (at a depth of about 11.112mm / 7/16") mill a groove of width approximately 0.1905mm / 0.0075" greater than the thickness of the edge of said male member; using an end mill router bit with a flat bottom, plunge-cut two substantially identical coin wells at depth of about 4.953mm / 0.195" (Said coin wells will each have a proximal end facing the central groove and a distal end facing the wood's outer edge.). To continue the non-sequential steps: optionally cut entry-notches into the distal end of each coin well; at a substantially-central fastening point along said central groove, cut a tool raceway perpendicular to said groove, the length of said raceway being about 1/3 the total diameter of a nickel; plunge the bit into one of the coin wells; move the bit toward the other coin well along the tool raceway, raising the bit when it comes to the second coin well (said movement cutting out a strip from the middle of the Female Part, crossing the Male Part Groove, such that a coin of the appropriate size can slide along it without falling out); on the Male Member (the center piece joint), cut the "fastener receiver slot" to a length same as the diameter of the coin plus a small offset (+0.1905mm / 0.0075") and the width of the thickness of the coin plus a small offset (+0.1905mm / 0.0075"); the "fastener receiver slot" is placed near the wood piece's edge (the piece to be joined), a distance in from the proximal edge corresponding to the depth of the top of the fastener slot in the Female Part; the center of said receiver slot therefore matches up with the center of the Female Part's tool raceway (groove for coin-pushing tool).

In other example embodiments, a table wherein at least one table leg is fastened to the bottom side of the table-top via one or more coin-shaped plate biscuits has at least one coin well and at least one slot milled into the bottom side of the tabletop. A coin may be placed in the coin well, then slid along an adjacent coin-raceway into a coin-sized slot in the table leg, such that the coin straddles the leg and the table by being simultaneously positioned in both the leg slot and the raceway. Said raceway has a sufficient overhang of at least 10% of the tabletop's thickness such that the coin holds the table together even if said table is lifted by its top.

The following is therefore the preferred method for manufacture of tooling and for milling of required slots so as to ultimately use nickels as biscuit fasteners:

### Method of Manufacturing the Milling Tool

The following specifications assume the disc used is a common U.S. Nickel, diameter of about 21.13mm / 0.832" and thickness of about 0.074". Same relative proportions may be used, however, so any appropriate disc may be used.
1. Take an existing "Woodruff Keyseat Cutter 602" or similar cutting tool, that is slightly larger [about 0.3302mm / 0.013" larger] than the diameter and thickness of a nickel, as described infra;
2. Machine said "Woodruff Keyseat Cutter" by cutting the disc 604 down to just slightly larger than a nickel as follows:
   2a. Machine the Woodruff Keyseat cutter disc 604 to a diameter of 21.463mm / 0.845" and to a thickness of 0.078". The diameter of the cutter will therefore be 0.3302mm / 0.013" larger than a nickel and the thickness of the cutter will be 0.1016mm / .004" thicker than a nickel.
   Note: other acceptable coins or disks require similar offsets. Ideally, the tool diameter should be about 1.56% larger than the coin, and the tool thickness should be about 5.40% thicker than the coin. These proportions should make the enclosed fastening method work for any customary furniture joint size.
3. The neck/shaft 606 of the Woodruff Keyseat cutter must also be machined down. For the "nickel-sized" slot cutter, the original shaft is 12.7mm / 0.5" diameter. Machine the neck of this shaft 606 to a diameter of 6.35mm / 0.25" (roughly a third (30.01%) of the diameter of a nickel).
This resulting 6.35mm / 0.25" diameter neck 606 will then clear the "push tool raceway" **116** (said raceway **116** is milled with a standard 6.35mm / 0.25" diameter end tool). (*"Raceway" **116** and Coin Well Raceway **816** and "Female [coin] Slot" are often used interchangeably, as the slot is naturally the end-resting position and a natural exit-position for the coin along its 'raceway' **116**).

### Method of Milling the Wood Panels

The following specifications assume the disc used is a common nickel, diameter of about 21.213mm / 0.832" and thickness of about 0.074".

### A. The Female "Receiving" Wood Piece:

1. Cut the "female" component's central groove 804 to a depth approximately half the thickness of the material (herein plywood in preferred embodiment). The width of the groove 806 should, of course, match the thickness of the male part 906, plus a small offset (+0.1905mm / 0.0075" in preferred embodiment).
2. At the joint point, cut the "tool raceway" 816 across (perpendicular) to the central groove 806, from the groove 806 to the end of the coin-well 810. The raceway 816 total distance is typically the coin diameter+ an additional 1/3 the coin-disc-fastener diameter (so in the preferred embodiment this measurement is about 21.168mm / 1.109"). The raceway depth shall be cut at a depth (from the surface) about 1/2 the depth of the male part groove (at the approximate midpoint into the wood). In the usual case, the groove will be perpendicular to the male part groove, but it could be angled and still function.
3. Cut two symmetrical mirror image "coin wells**"108** to the diameter of the coin plus a small offset (+0.1905mm / 0.0075"), at the same depth as the tool raceway **116.** The wells **108** are circular, and positioned approximately 3.505mm / 0.138" from the central groove (=approximately 1/6 the coin's diameter *away from* the male central groove in the case of a Nickel). Then cut the fastener slot (raceway **116)** using the following method:
4. Cut the "fastener slot" using the special router bit described *supra*
5. Plunge the bit into one of the coin wells;
6. Move the bit toward the other coin well along the tool raceway, and raise the bit when it comes to the second coin well. (This movement cuts a strip out of the middle of the Female Part, crossing the Male Part Groove, such that a coin of the appropriate size can slide along it without falling out).

### B. Milling the Center Joint (The Male Wood Piece)

1. On this piece, cut the "fastener receiver slot **902-908",** the length of the diameter of the coin plus a small offset (+-0.1905mm / 0.0075") and the width of the thickness of the coin plus a small offset (+0.1905mm / 0.0075").
2. The fastener receiver slot **902-908** is placed near the wood piece's edge (the piece to be joined), a distance in from the proximal edge corresponding to the depth of the top of the fastener slot **116** in the Female Part. The center of the slot should therefore match up with the center of the Female Part's tool raceway **116** (groove for coin-pushing tool).
3. As to the shape of the wood pieces to be joined, the preferred embodiment (shown in **Figs. 1A** through **2B**) features a basic half-lap joint. Cross lap joints are also available for middle pieces, wherein both pieces of wood continue beyond the joint, as shown in Figs. **3A** and **3B****.** In addition, any appropriate joint that utilizes the herein-disclosed nickel-biscuit method may be used (e.g. bevel cut scarf joints, miter-cut scarf joints, tabled lap joints, finger and tab joints, shelf-housing joints, etc.). The nickel biscuit method (and resulting apparatus furniture joint) works for all these joint varieties.

### Preferred Embodiment Measurements

In a 1" thick plywood joint (wherein both wood pieces are 1" thick plywood), the following parameters are preferred:
Diameter of coin: 21.18mm / .834";
Thickness of coin: 1.88mm / .074";
Width of push tool raceway (must be at least the diameter of the modified Woodruff' Keyseat cutter's neck/shaft, and it should be approximately .255";
Allowance to let moving parts of the assembly pass/slide by each other: (aka 'the offset') is 0.1905mm / .0075";
Thickness of material required so as not to break under normal stress: 5.08mm/0.2" Length of the shortest part of raceway (the overhang): should be between 1/3 and ¼ of the coin's diameter, or 0.635mm / .25" (= total distance of overhang from central groove to coin- well);
Depth of coin-well (and raceway): this plane is at (below surface): No-break-Distance + coin thickness+offset;
Diameter of coin well: coin diameter+ offset;
Distance from edge of male part groove to center of coin-well: coin diameter/2 +overhang;
Length from edge of coin well to end of notch: this is not important, but for ease should be raceway width/2;
Height of slot: coin-well depth+ no-break-distance;
Central groove in male wood part: male part thickness+offset;
Raceway overhang thickness: no-break-distance;
Distance from edge of male part to closest edge of coin acceptance slot: no break distance;
Width of coin acceptance slot [in male wood piece]: coin-thickness + offset;
Min length of the coin acceptance slot in male part: coin-diameter+ offset (this part may be a bit bigger without furniture fastening failure).

### Method of Furniture Assembly

If only one nickel/coin/disc **102** is fastened, the user positions the male piece **104** into the central groove **112** of the female piece **110,** then drops the coin **102** into either of the two coin wells **108,** then uses her tool **214** to push the nickel **102** along the raceway **116** into the male central slot **106.** The nickel **102** should not be pushed fully into the slot **106** (namely, some of the coin should still remain under the female piece's **110** raceway overhang **218).** If the coin mistakenly goes completely inside the male part's slot **106** and only one coin is used, the fastener will no longer be able to join the male **104** and female **110** parts, as the coin **102** would then be wholly concealed in the male slot **106).** Two nickels/discs would solve the above problem, and the two-coin fastening method works with the herein-disclosed invention.

### Method of Furniture Disassembly

If only one nickel/coin/disc 102 is fastened, the user pushes the nickel 102 along the raceway 116 until it is fully inside the male wood piece 104 (inside the slot I 06), then lifts the male piece I 04 away from the female piece 110, and then "shakes" or otherwise drops the nickel 102 out of the male piece 104.

### The "Single-Coin" Embodiment

If only one nickel/coin/disc is to be used as a fastener (Figs IA - 2B), there are three significant differences in manufacture, component design, method and assembly, while discussed *infra* and *supra,* may be emphasized as follows:
for the size/location of the male member slot **110,** it is half the size of the male member **104,** and cut a distance from the edge of the wood equal to the width of the slot;
the male member **104** gets a dado on the side opposite to its coin slot, to fit into the thinner slot in the female member **110** and produce a corner joint without overhang;
manufacture-method (slot-cutting) is tailored to the 'single coin' fastening apparatus and method, in that the modified-cutter is inserted into the singular coin slot **108** and moved through the raceway towards the male member groove, far enough that at least half the cutter's diameter extends into the male member groove, cutting the coin slot and creating the overhang. Next, the cutter it is moved back along the same path to the position of the singular coin well, from whence it is raised back upwards.

### Alternative Embodiments

**Fig. 17** shows a flowchart of a method of creating a furniture joint according to an example embodiment, method for milling slots in wood so a U.S. nickel 5¢ piece functions as a biscuit joiner, said nickel having a diameter of about 21.13mm / 0.832" and a thickness of about 1.88mm / 0.074, the method begins with machining a woodruff keyseat cutter tool's disc to a diameter of about 21.463mm / 0.845" and a thickness of about 0.078" in step **1701.** Step **1702** machines said cutter's shank to a diameter of about 6.35mm / 0.25"; the diameter of said cutter is therefore 0.3302mm / 0.013" larger than a nickel and that the thickness of said cutter is 0.1016mm / .004" thicker than a nickel. In step **1703,** a male wood piece-member and a female wood piece-member are provided to be joined as a joint; across said female member's face, at a depth of about 11.11mm / 7/16", mill a groove of width approximately 0.1905mm / 0.0075" greater than the thickness of the edge of said male member.

Using an end mill router bit with a flat bottom, step **1704** plunge-cuts two substantially identical coin wells at depth of about 4.953mm / 0.195", said coin wells each having a proximal end facing the central groove and a distal end facing the wood's outer edge, and then optionally cutting entry-notches into the distal end of each coin well in step **1705.** Step **1706** cuts a tool raceway perpendicular to said groove at a substantially-central fastening point along said central groove, cutting. The length of said raceway is about 1/3 the total diameter of a nickel.

The bit is plunged into one of the coin wells and move the bit toward the other coin well along the tool raceway in step **1707.** Step **1708** then raises the bit when it comes to the second coin well, in which said movement cuts out a strip from the middle of the female part that crosses the male part groove, such that a coin of the appropriate size can slide along it without falling out); on the male member (the center piece joint). A fastener receiver slot is cut to a length same as the diameter of the coin plus a small offset (+0.1905mm / 0.0075") and the width of the thickness of the coin plus a small offset (+0.1905mm / 0.0075") in step 1709. Ending the method, step 1710 places the fastener receiver slot near the wood piece's edge (the piece to be joined) at a distance in from the proximal edge corresponding to the depth of the top of the fastener slot in the female part. The center of said receiver slot therefore matches up with the center of the female part's tool raceway (groove for coin-pushing tool).

**Fig. 18** shows a flowchart of another method of creating a furniture joint according to an example embodiment. A method of combining a first piece of wood and a second piece of wood begins in step **1801** by milling a central groove into a first piece of wood, the grove running across a first axis along the length of the wood-piece's face to a depth of about half the first wood-piece's thickness. Next, a coin well is milled at a position on a second axis on the wood-piece's face in step **1802.** The second axis being perpendicular to the central groove, wherein the coin well is connected to the central groove by a tool-raceway. The tool-raceway likewise running along the second axis; wherein the coin well and the tool-raceway are positioned half as deep in the first wood-piece as is its central groove.

The coin well is accessible from the central groove via a substantially central raceway slot, where said slot is substantially covered by a raceway overhang and a second wood-piece has an edge thickness nominally smaller than the width of the first wood-piece' s central groove, such that the second wood piece's entire edge fits into the central groove. The second wood-piece further comprises a central coin slot positioned at a height and central position such that, when said second wood-piece is nestled into the central groove of said first wood piece, said central coin slot lies on the same plane-height as the height of said first wood piece's raceway and at the same central position as said raceway slot, such that a coin may be placed into the coin well and then subsequently pushed along said raceway to the point where the wood pieces meet, said coin thereby straddling the two wood-pieces and resting partially under said raceway overhang, so that said coin then holds the wood-pieces together, said coin thereby functioning as a plate biscuit joiner.

**Fig. 19** shows a flowchart of yet another method of creating a furniture joint according to an example embodiment. The method begins with step **1901** machining a woodruff keyseat cutter tool's disc to a diameter of about 21.463mm / 0.845" and a thickness of about 0.078" and machining said cutter's shank to a diameter of about 6.35mm / 0.25". Next step **1902** ensuring the diameter of said cutter is therefore 0.013" larger than a nickel and that the thickness of said cutter is 0.1016mm / .004" thicker than a nickel. A male wood piece-member and female wood piece-member to be joined as a joint are provided in step **1903.** A groove of width approximately 0.1905mm / 0.0075" greater than the thickness of the edge of said male member is milled in step **1904** across said female member's face, at a depth of about 11.112mm / 7/16".

Step **1905** uses an end mill router bit with a flat bottom to plunge-cut a coin well at depth of about 4.953mm / 0.195", the coin well having a proximal end facing the central groove and a distal end facing the wood's outer edge, before cutting an entry-notch into the distal end of the coin well in step **1906.** At a substantially-central fastening point along said central groove, step **1907** cuts a tool raceway perpendicular to said groove. The length of said raceway being about 1/3 the total diameter of a nickel. Step **1908** plunges the bit into one of the coin wells while moving the bit toward the other coin well along the tool raceway. This movement cutting out a strip from the middle of the female part, crossing the male part groove, and raising the bit when it comes to the second coin well such that a coin of the appropriate size can slide along it without falling out by step 1909. Step **1910** cuts into the male wood piece-member a fastener receiver slot to a length same as the diameter of the coin plus a small offset (+0.1905mm / 0.0075") and the width of the thickness of the coin plus a small offset (+0.1905mm / 0.0075") before placing the fastener receiver slot near the male wood piece-member's edge at a distance in from the proximal edge corresponding to the depth of the top of the fastener slot in the female part. The center of said receiver slot therefore matches up with the center of the female part's tool raceway (groove for coin-pushing tool).

A table wherein at least one table leg is fastened to the bottom side of the table-top via one or more coin-shaped plate biscuits, wherein at least one coin well and at least one slot are milled into the bottom side of the tabletop such that a coin may be placed in the coin well, then slid along an adjacent coin-raceway into a coin-sized slot in the table leg, such that the coin straddles the leg and the table by being simultaneously positioned in both the leg slot and the raceway, wherein said raceway has a sufficient overhang of at least ten per cent of the tabletop's thickness, such that the coin holds the table together even if said table is lifted by its top.

Throughout the above description, a U.S. nickel, having diameter of 21.25mm and thickness of 1.85mm, is utilized as a coin piece useful as a joint biscuit. Coins of other currencies, such as a 5cent Euro, having a diameter of 21.25mm and a thickness of 1.67mm, a 10cent Euro, having a diameter of 19.75mm and a thickness of 1.93mm, and a 2Kronor, having a diameter of 22.5mm and a thickness of 1.79mm, may be used in its place in a similar manner as the U.S. nickel is utilized herein.

In the summary above/below and in the detailed description above/below, and the claims below, and in the accompanying drawings and appendices, reference is made to particular features (including method steps) of the invention. The disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention.

Certain terminology and derivations thereof may be used in the following description for convenience in reference only and will not be limiting. For example, words such as "upward," "downward," "left," and "right" would refer to directions in the drawings to which reference is made unless otherwise stated. Similarly, words such as "inward" and "outward" would refer to directions toward and away from, respectively, the geometric center of a device or area and designated parts thereof. References in the singular tense include the plural, and vice versa, unless otherwise noted.

The term "comprises" and grammatical equivalents thereof are used herein to mean that other components, ingredients, steps, among others, are optionally present. For example, an article "comprising" (or "which comprises") components A, B and C can consist of (i.e., contain only) components A, B and C, or can contain not only components A, B, and C but also contain one or more other components.

Where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility).

The term "at least" followed by a number is used herein to denote the start of a range beginning with that number (which may be a range having an upper limit or no upper limit, depending on the variable being defined). For example, "at least 1" means 1 or more than 1.

The term "at most" followed by a number (which may be a range having 1 or 0 as its lower limit, or a range having no lower limit, depending upon the variable being defined). For example, "at most 4" means 4 or less than 4, and "at most 40%" means 40% or less than 40%. When, in this specification, a range is given as "(a first number) to (a second number)" or "(a first number) - (a second number)," this means a range whose limit is the second number. For example, 25 to 100 mm means a range whose lower limit is 25 mm and upper limit is 100 mm.

Aspects of the disclosed invention may be embodied as a system, method or process, or computer program product. Accordingly, aspects of the disclosed invention may take the form of an entirely different field and still hold for the herein disclosed invention (i.e. a system for woodcutting may be applied in the field of toys, boats, or even laser-cutting of plastics or metals).

Any element in a claim that does not explicitly state "means for" performing a specified function, or "step for" performing a specific function is not to be interpreted as a "means" or "step" clause as specified in 35. U.S.C. §112, ¶6. Specifically, the use of "step of' in the claims herein is not intended to invoke the provisions of U.S.C. §112, ¶6.

Therefore, the method infra is also a method of assembling a furniture joint, comprising a first piece of wood comprising a central groove running across a first axis along the length of the wood piece's face, said groove milled to a depth of about half the first wood piece's thickness; and two coin wells positioned on a second axis on the wood piece's face, said second axis being perpendicular to said groove; wherein said coin wells are connected by a tool-raceway, said raceway likewise running along the second axis (perpendicular to said groove); wherein said coin wells are substantially mirror images of each other; and wherein said coin wells and said raceway are positioned about half as deep in the first wood piece as is its central groove; and wherein the coin wells are accessible from the central groove via a raceway slot, said slot being substantially covered by a raceway overhang; said method further comprising a second wood piece whose edge thickness is nominally smaller than the width of the first wood piece' s central groove, such that said the second wood piece's entire edge fits into said groove; and said second wood piece further comprising a central coin slot positioned at a height and position such that, when said second wood piece is nestled into the central groove of said first wood piece, said central coin slot lies on the same plane-height as the plane-height of said first wood piece's raceway and at the same central position as said raceway slot, such that a coin may be placed into either of the coin wells and then subsequently pushed along said raceway to the point where the wood pieces meet, said coin thereby straddling the two wood pieces and resting partially under said raceway overhang, so that said coin then holds the wood pieces together, said coin thereby functioning as a plate biscuit joiner.

Also disclosed is the instant method wherein the coin is any disc with sufficient strength and texture to fit in the coin wells and to slide along the raceway and the slot, and to hold said wood pieces together per said method.

Also disclosed is the instant method wherein overhang's thickness is between about 15% and about 30% of the first wood piece's thickness.

Also disclosed is the instant method wherein the raceway overhang's thickness is about 20% of the first wood piece's thickness.

Also disclosed is the instant method wherein depth of the tool raceway equals: the overhang's thickness, plus the coin's thickness, plus an "offset" of between about 0.5% and 1.3% of the first wood piece's thickness; and wherein the second wood piece's coin slot is positioned at the same height as the raceway's depth.

Also disclosed is the instant method wherein depth of the raceway equals: the overhang' s thickness, plus the coin's thickness, plus an "offset" of about 0.75% of the first wood piece' s thickness; and wherein the second wood piece's coin slot is positioned at the same height as is the raceway's depth

Also disclosed is the instant method wherein said slot and said groove are larger than the pieces that fit inside them by an "offset" amount, and wherein the thickness of said overhang is the "no-break distance," and wherein both wood pieces are 1" plywood having about 1" edges; and wherein the coin has a diameter of about 21.18mm / 0.834" and a thickness of about 1.88mm / 0.074"; and wherein the first wood piece's central groove is about 25.590mm / 1.0075" wide, thereby being nominally wider than the male wood piece's edge; and wherein the diameter of each coin well is about 21.374 / 0.8415"; and wherein the tool raceway and the coin wells rest at a depth of 6.959mm / 0.274"; and wherein the width of said raceway is about 6.477mm / 0.255"; and wherein the offset is about 0.1905mm / 0.0075"; and wherein the 'no-break-distance' is about 5.08mm / 0.2" in height (wood thickness); and wherein the length of the overhang is about 6.35mm / 0.25"; and wherein the depth of said coin well and said raceway is equal to the no-break-distance + the coin-thickness + the offset; and where the diameter of the coin wells equal the coin diameter + the offset.

Therefore, the method infra is also a method for milling slots in wood so a U.S. nickel 5¢ piece functions as a biscuit joiner, said nickel having a diameter of about 21.13mm / 0.832" and a thickness of about 1.88mm / 0.074", said method comprising the following non-sequential steps: machine a woodruff keyseat cutter tool's disc to a diameter of about 21.463mm / 0.845" and a thickness of about 1.98mm / 0.078"; machine said cutter's shank to a diameter of about 6.35mm / 0.25"; ensure the diameter of said cutter is therefore 0.3302mm / 0.013" larger than a nickel and that the thickness of said cutter is 0.1016mm / .004" thicker than a nickel; provide a "male" wood piece-member and "female" wood piece-member to be joined as a joint; across said female member's face, at a depth of about 11.112mm / 7/16" , mill a groove of width approximately 0.1905mm / 0.0075" greater than the thickness of the edge of said male member; using an end mill router bit with a flat bottom, plunge-cut two substantially identical coin wells at depth of about 4.953mm / 0.195"; said coin wells each having a proximal end facing the central groove and a distal end facing the wood's outer edge; and then optionally cut entry-notches into the distal end of each coin well; and at a substantially-central fastening point along said central groove, cut a tool raceway perpendicular to said groove, the length of said raceway being about 1/3 the total diameter of a nickel; and plunge the bit into one of the coin wells; move the bit toward the other coin well along the tool raceway, raising the bit when it comes to the second coin well (said movement cutting out a strip from the middle of the Female Part, crossing the Male Part Groove, such that a coin of the appropriate size can slide along it without falling out); on the Male Member (the center piece joint), cut the "fastener receiver slot" to a length same as the diameter of the coin plus a small offset (+0.1905mm / 0.0075") and the width of the thickness of the coin plus a small offset (+0.1905mm / 0.0075"); the "fastener receiver slot" is placed near the wood piece's edge (the piece to be joined), a distance in from the proximal edge corresponding to the depth of the top of the fastener slot in the Female Part; the center of said receiver slot therefore matches up with the center of the Female Part's tool raceway (groove for coin-pushing tool).

Therefore, the method infra is also a furniture joint comprising at least a first and a second piece of wood, both wood pieces having at least one edge, wherein a groove for said second wood piece is milled into said first wood piece such that one edge of the second wood piece is wholly fit into said groove; and wherein disc-style plate biscuits are positioned into disc-slots in both the first and second wood pieces, said disc-slots lie on the same plane as one another, and wherein said disc-slots are each covered by an overhang whose thickness is at least 10% of the first wood piece's thickness.

Therefore, the method infra is also a furniture joint comprising at least a first and a second piece of wood, both wood pieces having at least one edge, wherein a groove for said second wood piece is milled into said first wood piece such that one edge of the second wood piece is wholly fit into said groove; and wherein disc-style plate biscuits are positioned into disc-slots in both the first and second wood pieces, said disc-slots lie on the same plane as one another, and wherein said disc-slots are each covered by an overhang whose thickness is between about 15% to about 25% of the thickness of the first wood piece.

Therefore, the method infra is also a furniture joint comprising at least a first and a second piece of wood, said wood pieces each having at least one edge, wherein a substantially central groove is milled into said first wood piece such that one whole edge of the second wood piece is fit into said groove; and wherein a disc-shaped plate biscuit is partially positioned into a slot milled into said first wood piece, said slot being substantially covered by an overhang whose thickness is between about 15% to about 25% of the thickness of said first wood piece, and wherein said disc-shaped plate biscuit is simultaneously partially positioned into a slot milled into said second wood piece, said slot resting at same height as the first wood piece' s slot, so that the plate biscuit straddles both wood pieces, allowing said overhang to hold said first wood piece fixed to said second wood piece using the disc as a joiner.

Therefore, the method infra is also a method of assembling a furniture joint, comprising; a first piece of wood comprising a central groove running across a first axis along the length of the wood piece's face, said groove milled to a depth of about half the first wood piece's thickness; and a coin well positioned on a second axis on the wood piece's face, said second axis being perpendicular to said groove, wherein said coin well is connected to said groove by a tool-raceway, said tool-raceway likewise running along said second axis; and wherein the coin well and the tool raceway are positioned about half as deep in the first wood piece as is its central groove; and wherein the coin well is accessible from the central groove via a substantially central raceway slot, said slot being substantially covered by a raceway overhang; and said method further comprising a second wood piece whose edge thickness is nominally smaller than the width of the first wood piece's central groove, such that said the second wood piece's entire edge fits into said groove; and wherein said second wood piece further comprises a central coin slot positioned at a height and central position such that, when said second wood piece is nestled into the central groove of said first wood piece, said central coin slot lies on the same plane-height as the height of said first wood piece's raceway and at the same central position as said raceway slot, such that a coin may be placed into the coin well and then subsequently pushed along said raceway to the point where the wood pieces meet, said coin thereby straddling the two wood pieces and resting partially under said raceway overhang, so that said coin then holds the wood pieces together, said coin thereby functioning as a plate biscuit joiner.

Also disclosed is the instant method wherein the coin is any disc with sufficient strength and texture to fit in the coin well raceway and slot, and to hold said wood pieces together per said method.

Also disclosed is the instant method of wherein overhang's thickness is between about 15% and about 30% of the first wood piece's thickness.

Also disclosed is the instant method wherein the raceway overhang's thickness is about 20% of the first wood piece's thickness.

Also disclosed is the instant method wherein depth of the tool raceway equals: the overhang's thickness, plus the coin's thickness, plus an "offset" of between about 0.5 -1.3% of the first wood piece's thickness; and wherein the second wood piece's coin slot is positioned at the same height as the raceway's depth.

Also disclosed is the instant method wherein depth of the tool raceway equals: the overhang's thickness, plus the coin's thickness, plus an "offset" of about 0.75% of the first wood piece's thickness; and wherein the second wood piece's coin slot is positioned at the same height as is the raceway's depth.

Also disclosed is the instant method wherein said slot and said groove are larger than the pieces that fit inside them by an "offset" amount, and wherein the thickness of said overhang is the "no-break distance," and wherein both wood pieces are 25.4mm / 1" plywood having about 25.4mm / 1" edges; and wherein the coin has a diameter of about 21.18mm / 0.834" and a thickness of about 1.88mm / 0.074"; and wherein the first wood piece's central groove is about 25.590mm /1.0075" wide, thereby being nominally wider than the male wood piece's edge; and wherein the diameter of each coin well is about 21.374 / 0.8415"; and wherein the tool raceway and the coin wells rest at a depth of 6.959mm / 0.274" ; and wherein the width of said raceway is about 6.477mm / 0.255"; and wherein the offset is about 0.1905mm / 0.0075"; and wherein the 'no-break-distance' is about 5.08mm / 0.2" in height (i.e. 5.08mm / 0.2" of wood-thickness); and wherein the length of the overhang is about 6.35mm / 0.25"; wherein the depth of said coin well and said raceway is equal to the no-break-distance plus the coin-thickness plus the offset; and where the diameter of the coin wells equal the coin diameter plus the offset.

Therefore, the method infra is also a method for milling slots in wood so a U.S. nickel (5¢ piece) functions as a biscuit joiner, said nickel having a diameter of about 21.13mm / 0.832" and a thickness of about 1.88mm / 0.074", said method comprising the following non-sequential steps: machine a woodruff keyseat cutter tool's disc to a diameter of about 21.463mm / 0.845" and a thickness of about 1.98mm / 0.078" machine said cutter's shank to a diameter of about 6.35mm / 0.25"; ensure the diameter of said cutter is therefore 0.33mm / 0.013" larger than a nickel and that the thickness of said cutter is 0.1016mm /.004" thicker than a nickel; provide a "male" wood piece-member and "female" wood piece-member to be joined as a joint; across said female member's face, at a depth of about 11.112mm / 7/16", mill a groove of width approximately 0.1905mm / 0.0075" greater than the thickness of the edge of said male member; using an end mill router bit with a flat bottom, plunge-cut a coin well at depth of about 4.953mm / 0.195"; said coin well having a proximal end facing the central groove and a distal end facing the wood's outer edge; and then cut an entry-notch into the distal end of the coin well; and at a substantially-central fastening point along said central groove, cut a tool raceway perpendicular to said groove, the length of said raceway being about 1/3 the total diameter of a nickel; and plunge the bit into one of the coin wells; move the bit toward the other coin well along the tool raceway, raising the bit when it comes to the second coin well (said movement cutting out a strip from the middle of the Female Part, crossing the Male Part Groove, such that a coin of the appropriate size can slide along it without falling out); on the Male Member (the center piece joint), cut the "fastener receiver slot" to a length same as the diameter of the coin plus a small offset (+0.1905mm / 0.0075") and the width of the thickness of the coin plus a small offset (+0.1905mm / 0.0075"); the "fastener receiver slot" is placed near the wood piece's edge (the piece to be joined), a distance in from the proximal edge corresponding to the depth of the top of the fastener slot in the Female Part; the center of said receiver slot therefore matches up with the center of the Female Part's tool raceway (groove for coin-pushing tool).

The skilled person will be aware of a range of possible modifications of the various aspects described above. Accordingly, the present invention is defined by the claims.

## Claims

1. A furniture joint, comprising:
a first piece of wood (110) comprising a central groove (112) running across a first axis along the length of the wood-piece's face, said groove milled to a depth of about half the first wood-piece's thickness;
**characterized in that** two coin wells (108) are positioned on a second axis on the wood-piece's face, said second axis being perpendicular to said groove (112);
wherein said coin wells are connected by a tool-raceway (116), said raceway likewise running along the second axis perpendicular to said groove;
wherein said coin wells (108) are substantially mirror images of each other; and wherein said coin wells and said raceway are positioned about half as deep in the first wood-piece as is its central groove;
wherein the coin wells are accessible from the central groove via a raceway slot (116), said slot being substantially covered by a raceway overhang (218); said furniture joint further comprising a second wood-piece (104) whose edge thickness is nominally smaller than the width of the first wood-piece's central groove, such that said the second wood piece's entire edge fits into said groove; and
said second wood-piece (104) further comprising a central coin slot (106) positioned at a height and position such that, when said second wood-piece is nestled into the central groove (112) of said first wood piece, said central coin slot lies on the same plane-height as the plane-height of said first wood piece's raceway and at the same central position as said raceway slot, such that a coin (102) may be placed into either of the coin wells and then subsequently pushed along said raceway to the point where the wood pieces meet, said coin thereby straddling the two wood-pieces and resting partially under said raceway overhang, so that said coin then holds the wood-pieces together, said coin thereby functioning as a plate biscuit joiner.

2. The furniture joint of claim 1, wherein the coin (102) is any disc with sufficient strength and texture to fit in the coin wells and to slide along the raceway and the slot (106), and to hold said wood-pieces together.

3. The furniture joint of claim 1, wherein the coin or disc (102) has at least one hole allowing it to be pulled out with ease using a tool that can enter a hole.

4. The furniture joint of claim 1, wherein the raceway overhang's thickness is between about 15% and about 30% of the first wood-piece's thickness.

5. The furniture joint of claim 1, wherein depth of the tool raceway equals: the overhang's thickness, plus the coin's thickness, plus an "offset" of between about 0.5 % and 1.3 % of the first wood-piece's thickness; and wherein the second wood-piece's coin slot is positioned at the same height as the raceway's depth.

6. The furniture joint of claim 1, wherein said slot (106) and said groove are larger than the pieces that fit inside them by an "offset" amount, and wherein the thickness of said overhang is the "no-break distance", and wherein both wood-pieces are 25.4mm (1") plywood having about 25.4mm (1") edges; wherein the coin has a diameter of about 21.18mm (0.834") and a thickness of about 1.18mm (0.074");
wherein the first wood-piece's central groove is about 25.590mm (1.0075") wide, thereby being nominally wider than the male wood-piece' s edge; wherein the diameter of each coin well is about 21.374 (0.8415"); wherein the tool raceway and the coin wells rest at a depth of 6.959mm (0.274");
wherein the width of said raceway is about 6.477mm (0.255"); wherein the offset is about 0.1905mm (0.0075"); wherein the no-break distance is about 5.08mm (0.2") in height of wood thickness;
wherein the length of the overhang is about 6.35mm (0.25"); wherein the depth of said coin well and said raceway is equal to the no-break-distance plus the coin-thickness plus the offset; and
wherein the diameter of the coin wells equals the coin diameter plus the offset.

7. A method for milling slots in wood so a coin piece functions as a biscuit joiner, **characterized by** the method comprising the following non-sequential steps:
machining a woodruff keyseat cutter tool's disc to a diameter of about 21.463mm (0.845") and a thickness of about 1.92mm (0.078");
machining said cutter's shank to a diameter of about 6.35mm (0.25");
the diameter of said cutter is therefore 0.33mm (0.013") larger than the coin piece and that the thickness of said cutter is 0.1016mm (0.004") thicker than the coin piece;
providing a male wood piece-member and female wood piece-member to be joined as a joint; across said female member's face, at a depth of about 11.1125mm (7/16"), mill a groove of width approximately 0.1905mm (0.0075") greater than the thickness of the edge of said male member;
using an end mill router bit with a flat bottom, plunge-cutting two substantially identical coin wells at depth of about 4.953mm (0.195"), said coin wells each having a proximal end facing the central groove and a distal end facing the wood's outer edge;
then optionally cutting entry-notches into the distal end of each coin well;
at a substantially-central fastening point along said central groove, cutting a tool raceway perpendicular to said groove, the length of said raceway being about 1/3 the total diameter of a nickel;
plunging the bit into one of the coin wells and move the bit toward the other coin well along the tool raceway;
raising the bit when it comes to the second coin well, wherein said movement cuts out a strip from the middle of the female part, crossing the male part groove, such that a coin of the appropriate size can slide along it without falling out, on the male member;
cutting a fastener receiver slot to a length same as the diameter of the coin plus a small offset (+0.1905mm (0.0075")) and the width of the thickness of the coin plus a small offset (+0.1905mm (0.0075")); and
placing the fastener receiver slot near the wood piece's edge, a distance in from the proximal edge corresponding to the depth of the top of the fastener slot in the female part;
wherein the center of said receiver slot therefore matches up with the center of the female part's tool raceway, which forms a groove for a coin-pushing tool.

8. The method of claim 7, wherein the coin well is substantially rectangular with round corners, and the coin is a substantially rectangular plate which may have one or more holes.

9. The method of claim 7, wherein the raceway is substantially spherically curved and a curved metal strip is inserted in lieu of a coin, and simple openings replace the coin wells.

10. A method for milling slots in wood according to claim 7 wherein the coin piece is a U.S. nickel, which is a five-cent piece, the nickel having a diameter of about 21.13mm (0.832") and a thickness of about 1.88mm (0.074") the method further ensuring the diameter of said cutter is 0.3302mm (0.013") larger than a nickel and that the thickness of said cutter is 0.1016mm (0.004") thicker than a nickel.

11. A method of assembling a furniture joint combining a first piece of wood (110) and a second piece of wood (104), comprising;
milling a central groove (112) into a first piece of wood, the groove running across a first axis along the length of the wood-piece' s face to a depth of about half the first wood-piece's thickness; and
milling a coin well (108) positioned on a second axis on the wood-piece' s face, the second axis being perpendicular to the central groove, wherein the coin well is connected to the central groove by a tool-raceway,
**characterized by** the tool-raceway (110) likewise running along the second axis; wherein the coin well (108) and the tool-raceway (110) are positioned half as deep in the first wood-piece as is its central groove (112);
wherein the coin well is accessible from the central groove via a substantially central raceway slot, said slot being substantially covered by a raceway overhang;
wherein a second wood-piece (104) has an edge thickness nominally smaller than the width of the first wood-piece's central groove (112), such that the second wood piece's entire edge fits into the central groove; and
wherein said second wood-piece (104) further comprises a central coin slot (106) positioned at a height and central position such that, when said second wood-piece is nestled into the central groove of said first wood piece, said central coin slot lies on the same plane-height as the height of said first wood piece's raceway and at the same central position as said raceway slot, such that a coin may be placed into the coin well and then subsequently pushed along said raceway to the point where the wood pieces meet, said coin thereby straddling the two wood-pieces and resting partially under said raceway overhang, so that said coin then holds the wood-pieces together, said coin thereby functioning as a plate biscuit joiner.

12. The method of claim 11, wherein said slot and said groove are larger than the pieces that fit inside them by an offset amount,
wherein the thickness of said overhang is the "no-break distance," wherein both wood-pieces are 1" plywood having about 1" edges;
wherein the coin has a diameter of about 21.18mm (0.834") and a thickness of about 1.18mm (0.074");
wherein the first wood-piece's central groove is about 25.590mm (1.0075") wide, thereby being nominally wider than the male wood-piece' s edge;
wherein the diameter of each coin well is about 21.374 (0.8415");
wherein the tool raceway and the coin wells rest at a depth of 6.959mm (0.274");
wherein the width of said raceway is about 6.477mm (0.255");
wherein the offset is about 0.1905mm (0.0075"); and wherein the no-break distance is about 5.08mm (0.2") in height, which is 5.08mm (0.2") of wood-thickness;
wherein the length of the overhang is about 6.35mm (0.25"); wherein the depth of said coin well and said raceway is equal to the no-break-distance plus the coin-thickness plus the offset; and
wherein the diameter of the coin wells equals the coin diameter plus the offset.

13. The method of claim 11 or 12, wherein the coin well (108) is substantially rectangular with round corners, and the coin is a substantially rectangular plate with one or more holes.

14. The method of any one of claims 11 - 13, wherein the raceway is substantially spherically curved and the coin comprises a curved strip and simple openings replace the coin wells.

15. An item of furniture having a first planar element (110), and at least one second furniture element, the first planar element (110) having a planar face and the at least one second furniture element fastened to the planar face of the first furniture element (110) via one or more coin-shaped plate biscuits (102);
**characterized in that** at least one coin well (108) and at least one slot (106) are milled into the planar face of the first element (110) such that a coin (102) may be placed in the coin well (108), then slid along an adjacent coin-raceway (116) of the first planar element (110) into a coin-sized slot (106) in the at least one second furniture element (104), such that the coin straddles the first and second furniture elements by being simultaneously positioned in both the slot (106) in the at least one second furniture element (104) and the coin-raceway (116); wherein said coin-raceway (116) has a sufficient overhang of at least ten per cent of the first planar element's thickness, such that the coin (102) holds the item of furniture together.

## Patentansprüche

1. Eine Möbelverbindung, umfassend:
Ein erstes Holzteil (110), das eine zentrale Nut (112) umfasst, die quer in einer ersten Achse entlang der Länge der Fläche des Holzteils verläuft, diese Nut ist in einer Tiefe von ungefähr der Hälfte der Stärke des ersten Holzstücks gefräst;
**gekennzeichnet dadurch, dass** zwei Münzen-Bohrlöcher (108) auf einer zweiten Achse der Fläche des Holzstücks positioniert sind, wobei diese zweite Achse rechtwinklig zu der Nut (112) verläuft;
wobei die Münzen-Bohrlöcher über einen Werkzeug-Führungskanal (116) verbunden sind, wobei dieser Führungskanal ebenso entlang der zweiten Achse rechtwinklig zu der Nut verläuft;
wobei die Münzen-Bohrlöcher (108) im Wesentlichen Spiegelbilder voneinander sind; und wobei die Münzen-Bohrlöcher und der Führungskanal ungefähr halb so tief in dem ersten Holzteil positioniert sind wie seine zentrale Nut;
wobei die Münzen-Bohrlöcher von der zentralen Nut über einen Führungskanal-Schlitz (116) zugänglich sind, dieser Schlitz ist im Wesentlichen von einem Führungskanal-Überstand (218) verdeckt; dieses Verfahren umfasst ferner ein zweites Holzteil (104), dessen Randstärke nominell kleiner ist als die Breite der zentralen Nut des ersten Holzteils, so dass die gesamte Kante des zweiten Holzteils in diese Nut passt; und
das zweite Holzteil (104) ferner einen zentralen Münzen-Schlitz (106) umfasst, der auf einer Höhe und in einer Position angebracht ist, so dass, wenn das zweite Holzteil in die zentrale Nut (112) des ersten Holzteils eingesteckt wird, der zentrale Münzen-Schlitz auf derselben Ebene-Höhe wie die Ebene-Höhe des Führungskanals des ersten Holzteils liegt und in derselben zentralen Position wie der Führungskanal-Schlitz, so dass eine Münze (102) in eines der Münzen-Bohrlöcher gelegt werden kann und danach entlang des Führungskanals zu dem Punkt geschoben werden kann, an dem die Holzteile aufeinandertreffen, diese Münze überspannt dadurch die beiden Holzteile und liegt teilweise unter dem Führungskanal-Überstand, so dass die Münze die Holzteile zusammenhält, die Münze funktioniert dadurch wie ein Flachdübel-Verbindungsplättchen.

2. Möbelverbindung nach Anspruch 1, wobei die Münze (102) jede Scheibe mit ausreichender Stärke und Textur ist, um in die Münzen-Bohrlöcher zu passen und entlang des Führungskanals und den Schlitz geschoben werden kann, um die Holzteile zusammenzuhalten.

3. Möbelverbindung nach Anspruch 1, wobei die Münze oder Scheibe (102) mindestens ein Loch aufweist, über das sie leicht mit einem Werkzeug, das in ein Loch gesteckt werden kann, herausgehoben werden kann.

4. Möbelverbindung nach Anspruch 1, wobei die Stärke des Führungskanal-Überstands zwischen ungefähr 15 % und ungefähr 30 % der Stärke des ersten Holzteils beträgt.

5. Möbelverbindung nach Anspruch 1, wobei die Tiefe des Werkzeug-Führungskanals gleich ist wie: die Stärke des Überstands, plus die Stärke der Münze, plus einem "Abstand" zwischen ungefähr 0,5 % und 1,3 % der Stärke des ersten Holzteils; und wobei der Münzen-Schlitz des zweiten Holzteils auf derselben Höhe positioniert ist wie die Tiefe des Führungskanals.

6. Möbelverbindung nach Anspruch 1, wobei der Schlitz (106) und die Nut um einen "Abstands"-Betrag größer sind als die Teile, die in sie hineinpassen, und wobei die Stärke des Überstands der "Nicht-Bruchabstand" ist und wobei beide Holzteile 25,4 mm (1") aus Sperrholz mit ungefähr 25,4 mm (1") Rand bestehen; wobei die Münze einen Durchmesser von ungefähr 21,18 mm (0,834") und eine Stärke von ungefähr 1,18 mm (0,074") hat;
wobei die zentrale Nut des ersten Holzteils ungefähr 25,590 mm (1,0075") breit ist, und dadurch nominell breiter als die Feder des Holzteil-Rands; wobei der Durchmesser jedes Münzen-Bohrlochs ungefähr 21,374 mm (0,8415") beträgt; wobei der Werkzeug-Führungskanal und die Münzen-Bohrlöcher in einer Tiefe von 6,959 mm (0,274") liegen; wobei die Breite des Führungskanals ungefähr 6,477 mm (0,255") beträgt; wobei der Abstand ungefähr 0,1905 mm (0,0075") aufweist; wobei der ,Nicht-Bruchabstand' ungefähr bei 5,08 mm (0,2") in Höhe der Holzstärke liegt;
wobei die Länge des Überstands ungefähr 6,35 mm (0,25") ist; wobei die Tiefe des Münzen-Bohrlochs und des Führungskanals gleich dem Nicht-Bruchabstand, plus der Münzen-Stärke, plus dem Abstand ist; und
wobei der Durchmesser der Münzen-Bohrlöcher gleich dem Münzen-Durchmesser plus dem Abstand ist.

7. Verfahren für das Fräsen von Schlitzen in Holz, so dass eine Münze als Flachdübel funktioniert, **gekennzeichnet durch** das Verfahren, das die folgenden nichtsequentiellen Schritte umfasst:
Bearbeiten einer Scheibe eines T-Nutfräsers auf einen Durchmesser von ungefähr 21,463 mm (0,845") und eine Stärke von ungefähr 1,92 mm (0,078");
Bearbeiten des Schafts des Fräsers auf einen Durchmesser von ungefähr 6,35 mm (0,25"); der Fräser ist deshalb 0,33 mm (0,013") größer als ein Fünfcentstück und die Stärke des Fräsers ist 0,1016 mm (0,004") größer als die eines Fünfcentstücks;
Bereitstellen einer Feder eines Holzteils und einer Nut eines Holzteils, die als Verbindung zusammengefügt werden sollen; über die Fläche des Nutteils in einer Tiefe von ungefähr 11,1125 mm (7/16") Fräsen einer Nut mit einer Breite, die ungefähr 0,1905 mm (0,0075") größer ist als die Stärke des Federteil-Randes;
Verwenden eines Langloch-Oberfräser-Bits mit flacher Unterseite, Ausführen eines Tauchschnitts für zwei im Wesentlichen identische Münzen-Bohrlöcher in einer Tiefe von ungefähr 4,953 mm (0,195"), diese Münzen-Bohrlöcher haben jeweils ein proximales Ende, das zur zentralen Nut zeigt und ein distales Ende, das zum Außenrand des Holzes zeigt; dann optional Schneiden von Eingangs-Kerben in das distale Ende jedes Münzen-Bohrlochs; an einem im Wesentlichen zentralen Befestigungspunkt entlang der zentralen Nut Schneiden eines Werkzeug-Führungskanals rechtwinklig zu der Nut, die Länge des Führungskanals ist ungefähr 1/3 des gesamten Durchmessers eines Fünfcentstücks;
Eintauchen des Bits in eine der Münzen-Bohrlöcher und Bewegen des Bits in Richtung des anderen Münzen-Bohrlochs entlang des Werkzeug-Führungskanals;
Anheben des Bits, wenn es zu dem zweiten Münzen-Bohrloch kommt, wobei die Schneidbewegung von der Mitte des Nutteils ausgeht, den Federteil der Nut quert, so dass eine Münze der entsprechenden Größe am Federteil entlanggleiten kann, ohne herauszufallen;
Zuschneiden eines Befestigungs-Aufnahmeschlitzes auf eine Länge, die gleich ist wie der Durchmesser der Münze plus einem kleinen Abstand (+0,1905 mm (0,0075")) und die Breite der Stärke der Münze plus einem kleinen Abstand (+0,1905 mm (0.0075")); und
Positionieren des Befestigungs-Aufnahmeschlitzes in der Nähe des Holzteil-Rands, in einem Abstand von dem proximalen Rand, der der Tiefe der Oberseite des Befestigungsschlitzes im Nutteil entspricht;
wobei die Mitte des Aufnahmeschlitzes deshalb mit der Mitte des Werkzeug-Führungskanals des Nutteils übereinstimmt, der eine Nut für ein Münzen-Schiebewerkzeug bildet.

8. Verfahren nach Anspruch 7, wobei das Münzen-Bohrloch im Wesentlichen rechtwinklig mit runden Ecken ist, und die Münze eine im Wesentlichen rechtwinklige Platte ist, die eine oder mehrere Bohrungen aufweisen kann.

9. Verfahren nach Anspruch 7, wobei der Führungskanal im Wesentlichen halbkugelförmig ist und ein gewölbter Metallstreifen anstelle einer Münze eingesetzt wird, und einfache Öffnungen die Münzen-Bohrlöcher ersetzen.

10. Verfahren für das Fräsen von Schlitzen in Holz nach Anspruch 7, wobei das Münzenstück ein US-amerikanischer Nickel, ein Fünfcentstück ist, das Füncentstück hat einen Durchmesser von ungefähr 21,13 mm (0,832") und eine Stärke von ungefähr 1,88 mm (0,074"), das Verfahren stellt ferner sicher, dass der Durchmesser des Fräsers 0,3302 mm (0,013") größer ist als ein Fünfcentstück und dass die Stärke des Fräsers 0,1016 mm (0,004") größer ist als ein Fünfcentstück.

11. Verfahren für das Montieren einer Möbelverbindung, die ein erstes Holzteil (110) und ein zweites Holzteil (104) kombiniert, umfassend;
Fräsen einer zentralen Nut (112) in einem ersten Holzteil, die Nut läuft quer in einer ersten Achse entlang der Länge der Fläche des Holzteils in einer Tiefe von ungefähr der Hälfte der Stärke des ersten Holzteils; und
Fräsen eines Münzen-Bohrlochs (108), das an einer zweiten Achse auf der Fläche des Holzteils positioniert ist, die zweite Achse verläuft rechtwinklig zu der zentralen Nut, wobei das Münzen-Bohrloch mit der zentralen Nut über einen Werkzeug-Führungskanal verbunden ist, **gekennzeichnet dadurch, dass** der Werkzeug-Führungskanal (110) gleichermaßen entlang der zweiten Achse verläuft; wobei das Münzen-Bohrloch (108) und der Werkzeug-Führungskanal (110) halb so tief in dem ersten Holzteil positioniert sind, wie die zentrale Nut (112);
wobei das Münzen-Bohrloch von der zentralen Nut über einen im Wesentlichen zentralen Führungskanal-Schlitz zugänglich ist, dieser Schlitz ist im Wesentlichen von einem Führungskanal-Überstand bedeckt;
wobei ein zweites Holzteil (104) eine Randstärke hat, die nominell kleiner ist als die Breite der zentralen Nut (112) des ersten Holzteils, so dass der gesamte Rand des zweiten Holzteils in die zentrale Nut passt; und
wobei das zweite Holzteil (104) ferner einen zentralen Münzen-Schlitz (106) umfasst, der auf einer Höhe und in einer zentralen Position angebracht ist, so dass, wenn das zweite Holzteil in die zentrale Nut des ersten Holzteils eingesetzt wird, der zentrale Münzen-Schlitz auf derselben Ebene-Höhe wie die Ebene-Höhe des Führungskanals des ersten Holzteils liegt und in derselben zentralen Position wie der Führungskanal-Schlitz, so dass eine Münze in eines der Münzen-Bohrlöcher gelegt werden kann und danach entlang des Führungskanals zu dem Punkt geschoben werden kann, an dem die Holzteile aufeinandertreffen, diese Münze überspannt dadurch die beiden Holzteile und liegt teilweise unter dem Führungskanal-Überstand, so dass die Münze die Holzteile zusammenhält, die Münze funktioniert dadurch wie ein Flachdübel-Verbindungsplättchen.

12. Verfahren nach Anspruch 11, wobei der Schlitz und die Nut länger sind als die Teile, die durch einen Abstandsbetrag in sie hineinpassen,
wobei die Stärke des Überstands der "Nicht-Bruchabstand" ist, wobei beide Holzteile 1"-Sperrholzplatten mit 1"-Rändern sind;
wobei die Münze einen Durchmesser von ungefähr 21,18 mm (0,834") und eine Stärke von ungefähr 1,18 mm (0,074") aufweist;
wobei die zentrale Nut des ersten Holzteils ungefähr 25,590 mm (1,0075") breit ist, wodurch sie nominell breiter ist als der Rand des Feder-Holzteils;
wobei der Durchmesser jedes Münzen-Bohrlochs ungefähr 21,374 (0,8415") beträgt;
wobei der Werkzeug-Führungskanal und die Münzen-Bohrlöcher in einer Tiefe von 6,959 mm (0,274") liegen;
wobei die Breite des Führungskanals ungefähr 6,477 mm (0,255") beträgt;
wobei der Abstand ungefähr 0,1905 mm (0,0075") ist; und wobei der Nicht-Bruchabstand ungefähr 5,08 mm (0,2") in der Höhe aufweist, was 5,08 mm (0,2") der Holzstärke ist;
wobei die Länge des Überstands ungefähr 6,35 mm (0,25") beträgt; wobei die Tiefe des Münzen-Bohrlochs und des Führungskanals gleich dem Nicht-Bruchabstand, plus der Münzen-Stärke, plus dem Abstand ist; und
wobei der Durchmesser der Münzen-Bohrlöcher gleich dem Münzen-Durchmesser plus dem Abstand ist.

13. Verfahren nach Anspruch 11 oder 12, wobei das Münzen-Bohrloch (108) im Wesentlichen rechtwinklig mit runden Ecken und die Münze eine im Wesentlichen rechtwinklige Platte mit einer oder mehreren Bohrungen ist.

14. Verfahren nach einem der Ansprüche 11 - 13, wobei der Führungskanal im Wesentlichen halbkugelförmig ist und die Münze einen gewölbten Streifen umfasst und einfache Öffnungen die Münzen-Bohrlöcher ersetzen.

15. Ein Möbelstück mit einem ersten planaren Element (110) und mindestens ein zweites Möbelelement, das erste planare Element (110) hat eine ebene Fläche und mindestens ein zweites Möbelelement ist an der ebenen Fläche des ersten Möbelelements (110) über ein oder mehrere münzenförmige Flachdübel (102) befestigt;
**gekennzeichnet dadurch, dass** mindestens ein Münzen-Bohrloch (108) und mindestens ein Schlitz (106) in die ebene Fläche des ersten Elements (110) gefräst sind, so dass eine Münze (102) in dem Münzen-Bohrloch (108) platziert und dann entlang eines angrenzenden Münzen-Führungskanals (116) des ersten planaren Elements (110) in einen Schlitz der Größe einer Münze (106) in das mindestens eine zweite Möbelelement (104) geschoben werden kann, so dass die Münze das erste und das zweite Möbelelement überspannt und gleichzeitig in beiden Schlitzen (106) in dem mindestens einen zweiten Möbelelement (104) und dem Münzen-Führungskanal (116) positioniert ist; wobei der Münzen-Führungskanal (116) einen ausreichenden Überstand von mindestens zehn Prozent der Stärke des ersten planaren Elements aufweist, so dass die Münze (102) das Möbelstück zusammenhält.

## Revendications

1. Assemblage de meuble comprenant :
une première pièce de bois (110) comprenant une rainure centrale (112) s'étendant sur un premier axe sur la longueur de la face de la pièce de bois, ladite rainure étant fraisée à une profondeur d'environ la moitié de l'épaisseur de la première pièce de bois ;
**caractérisé en ce que** deux puits de pièce (108) sont positionnés sur un second axe sur la face de la pièce de bois, ledit second axe étant perpendiculaire à ladite rainure (112) ;
dans lequel lesdits puits de pièce sont reliés par un chemin de roulement de l'outil (116), ledit chemin de roulement s'étendant de la même manière le long du second axe perpendiculaire jusqu'à ladite rainure ;
dans lequel lesdits puits de pièce (108) sont pratiquement des images miroirs l'un de l'autre ; et dans lequel lesdits puits de pièce et ledit chemin de roulement sont positionnés à environ la moitié de la profondeur de la première pièce de bois par rapport à sa rainure centrale ;
dans lequel les puits de pièce sont accessibles à partir de la rainure centrale par l'intermédiaire d'une fente de chemin de roulement (116), ladite fente étant pratiquement couverte par un surplomb du chemin de roulement (218) ; ledit procédé comprend en outre une seconde pièce de bois (104) dont l'épaisseur du bord est nominalement inférieure à la largeur de la rainure centrale de la première pièce de bois, de sorte que ledit bord entier de la seconde pièce de bois s'insère dans ladite rainure ; et
ladite seconde pièce de bois (104) comprend en outre une fente de pièce centrale (106) placée à une hauteur et dans une position telle que, lorsque ladite seconde pièce de bois est emboîtée dans la rainure centrale (112) de ladite première pièce de bois, ladite fente de pièce centrale se trouve sur le même plan-hauteur que le plan-hauteur du chemin de roulement de ladite première pièce de bois et dans la même position centrale que ladite fente du chemin de roulement, de sorte qu'une pièce (102) peut être placée dans l'un ou l'autre des puits de pièce et ensuite poussée le long dudit chemin de roulement jusqu'au point de rencontre des pièces de bois, ladite pièce chevauchant ainsi les deux pièces de bois et reposant partiellement sous ledit surplomb du chemin de roulement, de manière à ce que ladite pièce maintienne alors les pièces de bois ensemble, ladite pièce fonctionnant ainsi comme un joint de plaques de bois.

2. Assemblage de meuble selon la revendication 1, dans lequel la pièce (102) est un disque quelconque présentant une résistance et une texture suffisantes pour s'insérer dans les puits de pièce et pour glisser le long du chemin de roulement et de la fente, et pour maintenir lesdites pièces de bois ensemble.

3. Assemblage de meuble selon la revendication 1, dans lequel la pièce ou le disque (102) présente au moins un trou permettant de l'extraire facilement à l'aide d'un outil pouvant pénétrer dans un trou.

4. Assemblage de meuble selon la revendication 1, dans lequel l'épaisseur du surplomb du chemin de roulement est comprise entre environ 15 % et environ 30 % de l'épaisseur de la première pièce de bois.

5. Assemblage de meuble selon la revendication 1, dans lequel la profondeur du chemin de roulement de l'outil est égale à : l'épaisseur du surplomb, plus l'épaisseur de la pièce, plus un « décalage » d'environ 0,5 % à 1,3 % de l'épaisseur de la première pièce de bois ; et dans lequel la fente de pièce de la seconde pièce de bois est positionnée à la même hauteur que la profondeur du chemin de roulement.

6. Assemblage de meuble selon la revendication 1, dans lequel ladite fente (106) et ladite rainure sont plus grandes que les pièces qui s'y insèrent d'une quantité « décalée » et dans lequel l'épaisseur dudit surplomb est la « distance sans (risque de) rupture », et dans lequel les deux pièces de bois sont des contreplaqués de 25,4 mm (1") présentant des bords d'environ 25,4 mm (1") ; dans lequel la pièce présente un diamètre d'environ 21,18 mm (0,834") et une épaisseur d'environ 1,18 mm (0,074") ;
dans lequel la rainure centrale de la première pièce de bois présente une largeur d'environ 25,59 mm (1,0075") étant ainsi nominalement plus large que le bord de la pièce de bois mâle ; dans lequel le diamètre de chaque puits de pièce est d'environ 21,374 mm (0,8415") ; dans lequel le chemin de roulement de l'outil et les puits de pièce reposent à une profondeur de 6,959 mm (0,274") ;
dans lequel la largeur dudit chemin de roulement est d'environ 6,477 mm (0,255") ; dans lequel le décalage est d'environ 0,1905 mm (0,0075") ; dans lequel la « distance sans rupture » est d'environ 5,08 mm (0,2") en hauteur de l'épaisseur du bois ;
dans lequel la longueur du surplomb est d'environ 6,35 mm (0,25") ; dans lequel la profondeur dudit puits de pièce et dudit chemin de roulement est égale à la distance sans rupture plus l'épaisseur de la pièce plus le décalage ; et
dans lequel le diamètre des puits de pièce est égal au diamètre de la pièce plus le décalage.

7. Procédé servant au fraisage de fentes dans le bois pour qu'une pièce fonctionne comme un joint de plaque, **caractérisé en ce que** le procédé comprend les étapes non séquentielles suivantes :
l'usinage le disque d'un outil de fraisage pour le logement de clavette en bois, pour obtenir un diamètre d'environ 21,463 mm (0,845") et une épaisseur d'environ 1,92 mm (0,078") ;
l'usinage de la queue de ladite fraise à un diamètre d'environ 6,35 mm (0,25") ; le diamètre de ladite fraise est donc supérieur de 0,33 mm (0,013") à celui d'un nickel et l'épaisseur de ladite fraise est supérieure de 0,1016 mm (0,004") à celle d'un nickel ;
la fourniture d'une pièce de bois mâle et une pièce de bois femelle à assembler en tant qu'assemblage ; à travers la face dudit élément femelle, à une profondeur d'environ 11,1125 mm (7/16"), le fraisage d'une rainure d'une largeur d'environ 0,1905 mm (0,0075") plus grande que l'épaisseur du bord dudit élément mâle ;
à l'aide d'une Fraise en bout à rainurer à fond plat, la découpe en plongée de deux puits de pièce pratiquement identiques à une profondeur d'environ 4,953 mm (0,195"), lesdits puits de pièce présentant chacun une extrémité proximale faisant face à la rainure centrale et une extrémité distale faisant face au bord extérieur du bois ;
puis, éventuellement, la découpe des encoches d'entrée dans l'extrémité distale de chaque puits de pièce ;
à un point de fixation pratiquement central le long de ladite rainure centrale, la découpe d'un chemin de roulement de l'outil perpendiculaire à ladite rainure, la longueur dudit chemin de roulement étant d'environ 1/3 du diamètre total d'un nickel ;
l'immersion de la fraise dans l'un des puits de pièce et le déplacement de la fraise vers l'autre puits de pièce le long du chemin de roulement de l'outil ;
le relevage de la fraise quand elle vient au niveau du second puits de pièce, dans lequel ledit déplacement découpe à partir du milieu de la partie femelle et traversant la rainure de la partie mâle, de sorte qu'une pièce de taille appropriée peut glisser le long de celle-ci sans tomber, sur l'élément mâle ;
la découpe d'une fente de réception de l'élément de fixation à une longueur égale au diamètre de la pièce plus un petit décalage (+0,1905 mm (0,0075")) et à la largeur de l'épaisseur de la pièce plus un petit décalage (+0,1905 mm (0,0075")) ; et
le placement de la fente de réception de l'élément de fixation près du bord de la pièce de bois, à une distance du bord proximal correspondant à la profondeur de la partie supérieure de la fente de l'élément de fixation dans la partie femelle ;
dans lequel le centre de ladite fente de réception correspond au centre du chemin de roulement de l'outil de la partie femelle qui forme une rainure pour un outil de poussée de pièce.

8. Procédé selon la revendication 7, dans lequel le puits de pièce est pratiquement rectangulaire avec des coins ronds et la pièce est une plaque sensiblement rectangulaire qui peut présenter un ou plusieurs trous.

9. Procédé selon la revendication 7, dans lequel le chemin de roulement est sensiblement pratiquement et une bande métallique incurvée est insérée à la place d'une pièce et des ouvertures simples remplacent les puits de pièce.

10. Procédé servant au fraisage de fentes dans le bois selon la revendication 7, dans laquelle la pièce de monnaie est un nickel américain, qui est une pièce de cinq cents, le nickel présentant un diamètre d'environ 21,13 mm (0,832") et une épaisseur d'environ 1,88 mm (0,074"), le procédé garantissant en outre que le diamètre de ladite fraise est de 0,3302 mm (0,013") plus grand qu'un nickel et que l'épaisseur de ladite fraise est de 0,1016 mm (0,004") plus grande qu'un nickel.

11. Procédé de montage d'un assemblage de meuble combinant une première pièce de bois (110) et une seconde pièce de bois (104), comprenant ;
le fraisage d'une rainure centrale (112) dans une première pièce de bois, la rainure s'étendant sur un premier axe sur la longueur de la face de la pièce de bois à une profondeur d'environ la moitié de l'épaisseur de la première pièce de bois ; et
le fraisage d'un puits de pièce (108) positionné sur un second axe sur la face de la pièce de bois, le second axe étant perpendiculaire à la rainure centrale, le puits de pièce étant relié à la rainure centrale par un chemin de roulement de l'outil,
**caractérisé en ce que** le chemin de roulement de l'outil (110) s'étend de la même manière le long du second axe ; dans lequel le puits de pièce (108) et le chemin de roulement de l'outil (110) sont positionnés à la moitié de la profondeur de la première pièce de bois par rapport à sa rainure centrale (112) ;
dans lequel le puits de pièce est accessible à partir de la rainure centrale par l'intermédiaire d'une fente du chemin de roulement pratiquement central, ladite fente étant pratiquement couverte par un surplomb du chemin de roulement ;
dans lequel une seconde pièce de bois (104) présente une épaisseur de bord nominalement inférieure à la largeur de la rainure centrale (112) de la première pièce de bois, de sorte que le bord entier de la seconde pièce de bois s'adapte dans la rainure centrale ; et
dans lequel ladite seconde pièce de bois (104) comprend en outre une fente de pièce centrale (106) placée à une hauteur et dans une position centrale telles que, lorsque ladite seconde pièce de bois est emboîtée dans la rainure centrale de ladite première pièce de bois, ladite fente de pièce centrale se trouve sur le même plan-hauteur que la hauteur du chemin de roulement de ladite première pièce de bois et dans la même position centrale que ladite fente du chemin de roulement, de sorte qu'une pièce peut être placée dans un puits de pièce et ensuite poussée le long dudit chemin de roulement jusqu'au point de rencontre des pièces de bois, ladite pièce chevauchant ainsi les deux pièces de bois et reposant partiellement sous ledit surplomb du chemin de roulement, de manière à ce que ladite pièce maintienne alors les pièces de bois ensemble, ladite pièce fonctionnant ainsi comme un joint de plaques de bois.

12. Procédé selon la revendication 11, dans lequel ladite fente et ladite rainure sont plus grandes que les pièces qui s'y insèrent d'une quantité décalée,
dans lequel l'épaisseur dudit surplomb est la « distance sans rupture », les deux pièces de bois étant des contreplaqués de 25,4 mm (1") présentant des bords d'environ 25,4 mm (1") ; dans lequel la pièce présente un diamètre d'environ 21,18 mm (0,834") et une épaisseur d'environ 1,18 mm (0,074") ;
dans lequel la rainure centrale de la première pièce de bois présente une largeur d'environ 25,59 mm (1,0075"), étant ainsi nominalement plus large que le bord de la pièce de bois mâle ; dans lequel le diamètre de chaque puits de pièce est d'environ 21,374 mm (0,8415") ;
dans lequel le chemin de roulement de l'outil et les puits de pièce reposent à une profondeur de 6,959 mm (0,274") ;
dans lequel la largeur dudit chemin de roulement est d'environ 6,477 mm (0,255") ;
dans lequel le décalage est d'environ 0,1905 mm (0,0075") ; et dans lequel la distance sans rupture est d'environ 5,08 mm (0,2") de hauteur, soit 5,08 mm (0,2") d'épaisseur de bois ; dans lequel la longueur du surplomb est d'environ 6,35 mm (0,25") ; dans lequel la profondeur dudit puits de pièce et dudit chemin de roulement est égale à la distance sans rupture plus l'épaisseur de la pièce plus le décalage ; et
dans lequel le diamètre des puits de pièce est égal au diamètre de la pièce plus le décalage.

13. Procédé selon la revendication 11 ou 12, dans lequel le puits de pièce (108) est pratiquement rectangulaire avec des coins ronds et la pièce est une plaque pratiquement rectangulaire qui comporte un ou plusieurs trous.

14. Procédé selon l'une quelconque des revendications 11 à 13, dans lequel le chemin de roulement est pratiquement incurvée de façon sphérique et la pièce comprend une bande incurvée et des ouvertures simples remplacent les puits de pièce.

15. Meuble comportant un premier élément plan (110) et au moins un second élément de meuble, le premier élément plan (110) ayant une face plane et au moins un second élément de meuble fixé à la face plane du premier élément de meuble (110) par l'intermédiaire d'un ou de plusieurs joints de plaque en forme de pièce (102) ;
**caractérisé en ce qu'**au moins un puits de pièce (108) et au moins une fente (106) sont fraisés dans la face plane du premier élément (110) de sorte qu'une pièce (102) peut être placée dans le puits de pièce (108), puis glissée le long d'un chemin de roulement de pièce adjacent (116) au premier élément plan (110) dans une fente de la taille d'une pièce de monnaie (106) dans au moins un second élément de meuble (104) de sorte que la pièce chevauche les premier et second éléments de meuble en étant positionnée simultanément dans la fente (106) dudit au moins un second élément de meuble (104) et dans le chemin de roulement de pièce (116) ; dans lequel ledit chemin de roulement de pièce (116) présente un surplomb suffisant d'au moins dix pour cent de l'épaisseur du premier élément plan, de sorte que la pièce (102) maintienne l'ensemble du meuble.
